# EUROPÄISCHE PATENTSCHRIFT

(11) **EP 3 792 668 B1**
(45) Veröffentlichungstag und Bekanntmachung des Hinweises auf die Patenterteilung: **15.12.2021**
(21) Anmeldenummer: 20189042.3
(22) Anmeldetag: 31.07.2020
(51) Int. Cl.: G01V 8/10, G01V 8/14, G01S 17/08, G01S 7/481, G02B 19/00, G02B 27/09

(54) **OPTOELEKTRONISCHER SENSOR UND VERFAHREN ZUM ERFASSEN VON OBJEKTEN IN EINEM ÜBERWACHUNGSBEREICH**
OPTOELECTRONIC SENSOR AND METHOD FOR DETECTING OBJECTS IN A SURVEILLANCE AREA
CAPTEUR OPTOÉLECTRONIQUE ET PROCÉDÉ DE DÉTECTION DES OBJETS DANS UNE ZONE DE SURVEILLANCE

(30) Priorität: 10.09.2019 DE 102019124266
(43) Veröffentlichungstag der Anmeldung: 17.03.2021
(73) Patentinhaber: SICK AG, 79183 Waldkirch (DE)
(72) Erfinder: Ringwald, Siegfried, 79215 Elzach (DE); Menzel, Christoph, 79211 Denzlingen (DE)

(56) Entgegenhaltungen:
- EP-A2- 0 401 654
- EP-B1- 0 401 654
- EP-B1- 0 770 219
- WO-A1-2018/221060
- US-A1- 2016 170 562
- US-A1- 2019 101 647

## Beschreibung

Die Erfindung betrifft einen optoelektronischen Sensor und ein Verfahren zum Erfassen von Objekten in einem Überwachungsbereich nach dem Oberbegriff von Anspruch 1 beziehungsweise 11.

Optoelektronische Sensoren nutzen in der Regel eine Empfängerlinse, um das zu detektierende Licht auf ihren Lichtempfänger zu fokussieren. Solche Empfängerlinsen haben eine gewisse Baugröße und Brennweite, und daraus ergibt sich ein definierter Abstand zwischen Empfängerlinse und Lichtempfänger.

Um mit einem Sensor große Reichweiten zu erzielen, sollte möglichst viel Nutzlicht eingesammelt werden und daher die Empfangsapertur groß sein. Eine große Empfangsöffnung geht aber zwangsläufig mit einer großen Bautiefe einher. Man kann in etwa davon ausgehen, dass der Durchmesser der Empfangsapertur der erforderlichen Bautiefe für die Empfangslinse und den Lichtempfänger entspricht. Dieser Zusammenhang lässt sich auch mit einer klassischen Empfangsoptik nicht aufbrechen, für die eine große Empfangsapertur bei sehr kleiner Brennweite in einem Bauteil vereint widersprüchliche Anforderungen stellt.

Große Empfangsaperturen bedeuten also eine große Bautiefe und somit eine große Sensorbauform. Kleine Bauformen, insbesondere kleine Bautiefen, lassen sich nicht mit einer Empfangsoptik größerer Empfangsapertur für deutlich erhöhte Reichweiten ausstatten. Gerade bei einfachen Sensoren wie Miniaturlichtschranken steht jedoch teilweise eine minimale Bautiefe von nur wenigen Millimetern für Optik, Elektronik und mechanische Komponenten zur Verfügung. Beispielsweise bei einem 3,5 mm schmalen Sensor sind abzüglich Gehäusewandungen, Leiterplatte und elektronischen Bauteilen für die Empfangsoptik gerade noch 1,5 mm verfügbar. Mit einer klassischen Empfangsoptik ist dann nicht wesentlich mehr als eine Apertur von 1,5 mm möglich.

Eine verbreitete Klasse von optoelektronischen Sensoren misst einen Abstand oder berücksichtigt zumindest den Objektabstand in ihrer Auswertung. Eines der Messprinzipien hierfür ist die optische Triangulation, die darauf beruht, einen Lichtsender und einen ortsauflösenden Lichtempfänger um einen bekannten Basisabstand gegeneinander versetzt anzuordnen. Sende- und Empfangslichtstrahl stehen dann in einem Winkel zueinander, was dazu führt, dass der Empfangslichtfleck auf dem Empfänger in Abhängigkeit von dem Abstand zu dem angetasteten Objekt wandert. Die Position des Empfangslichtflecks auf dem ortsauflösenden Lichtempfänger ist demnach ein Maß für den Objektabstand.

Es gibt nicht nur messende Triangulationstaster, die in der skizzierten Weise einen Abstand bestimmen und ausgeben, sondern auch schaltende Systeme nach dem Triangulationsprinzip, deren Schaltverhalten von dem Objektabstand abhängt. Zu diesen Sensoren gehören die hintergrundausblendenden Lichttaster. Sie sind schaltend, geben also lediglich ein binäres Objektfeststellungsignal aus. Zugleich wird aber der Aufbau eines Triangulationstasters ausgenutzt, um mit einem zumindest in einen Nah- und einen Fernbereich ortsauflösenden Lichtempfänger zwei Empfangssignale zu erzeugen. Deren Differenz wird mit einer Schaltschwelle bewertet, um so die Objekterfassung auf einen bestimmten Entfernungsbereich zu beschränken und Empfangssignale von Objekten außerhalb dieses Entfernungsbereichs als Hintergrundsignal auszublenden. Ein hintergrundausblendender Lichttaster ist beispielsweise in der DE 197 21 105 C2 offenbart, wobei hier Schalter vorgesehen sind, um die einzelnen Elemente eines ortsauflösenden Lichtempfängers auf veränderliche Weise dem Nah- oder Fernbereich zuzuordnen.

Auch derartige nach dem Triangulationsprinzip arbeitende Sensoren benötigen eine gewisse Bautiefe. Eine hohe Empfindlichkeit lässt sich nur durch entsprechende Bautiefe erreichen, und das beschränkt oder verhindert in gewissen Anwendungen den Einsatz derartiger Sensoren.

Aus der DE 198 58 769 A1 ist ein optisches System mit einer lichtdurchlässigen flachen Lichtleiterplatte bekannt. In verschiedenen Ausführungsformen wird das auf die Flachseite einstrahlende Empfangslicht durch lichtbrechende Subaperturen, Keilflächen oder Schichten unterschiedlicher Brechzahl zu einem Lichtempfänger gelenkt. Diese refraktive Anordnung hat aber nur eine geringe Transmissioneffizienz und resultiert immer noch in einer relativ großen Bautiefe eines damit ausgerüsteten Sensors von 5 bis 10 mm.

Aus der DE 10 2014 102 420 A1 ist ein optoelektronischer Sensor bekannt, dessen Empfangsoptik eine Blende mit einem nachgeordneten optischen Trichterelement aufweist. Dadurch wird aber die Bautiefe der Empfangsoptik sogar noch größer.

Die US 5 268 985 befasst sich mit einer Lichtleitervorrichtung mit einer holografischen Schicht, die in ein lichtdurchlässiges Substrat eingebettet ist. Auf die holografische Schicht einfallendes Licht wird in einem Winkel seitlich abgelenkt und dann von dem Substrat unter Totalreflexion zur Seite umgelenkt.

Die US 2006/0091305 A1 beschreibt ein optisches phased array, das eine Kaskade von Bragg-Gittern aufweist, die jeweils einen Teil des Sendelichts umlenken, wobei durch Phasenschieber zwischen den Bragg-Gittern der insgesamt entstehende Sendelichtstrahl geformt wird. Ein empfangsseitiger Einsatz mit umgekehrten Strahlwegen ist ebenfalls möglich.

Die EP 1 312 936 A2 offenbart eine optoelektronische Vorrichtung zur Erfassung von Objekten. In einer Ausführungsform steht eine Lichtleiterplatte senkrecht zur Einfallsrichtung des Empfangslichts. Oberhalb der Hauptfläche der Lichtleiterplatte befinden sich zwei Prismenlagen, die das Empfangslicht quer in die Lichtleiterplatte umlenken. Am hinteren Ende der Lichtleiterplatte ist ein Umlenkelement vorgesehen.

Die DE 600 01 647 T2 offenbart einen diffraktiven Kollektor. Auf dessen Oberseite ist ein holographisches Gitter vorgesehen, das einfallendes Licht zur Kante umlenkt, wo es von Fotodetektoren erfasst wird.

Aus der DE 20 2006 017 445 U1 ist ein Lichtmodul für einen hinterleuchtbaren Schriftzug bekannt. Es strahlen zwei LEDs von beiden Seiten her Licht in eine Lichtleiterplatte ein. Die Unterseite des Lichtmoduls ist eine Rasterfläche, deren Struktur das Licht in den Schriftzug umlenkt.

Die EP 0 770 219 B1 offenbart eine optische Messvorrichtung. In einer Ausführungsform ist eine optische Platte vorgesehen, die das in der Plattenebene ausgesandte Licht eines Lasersenders über eine diffraktive Struktur senkrecht auskoppelt. Eine weitere diffraktive Struktur lenkt rückkehrendes Empfangslicht wieder in die Plattenebene und je nach Abstand eines angemessenen Objekts auf einen bestimmten Detektor eines Detektorarrays.

Aus der EP 0 401 654 A2 ist eine Vorrichtung zum Ein- und/oder Auskoppeln von Lichtstrahlen in einem integriert-optischen Baustein bekannt.

Die WO 2018/221060 A1 offenbart eine weitere LIDAR-Vorrichtung mit einer optischen Antenne, die mehrere diffraktive Strukturen zur Umlenkung aufweist.

Aus der US 2019/0101647 A1 ist ein integrierter optischer Sender und Empfänger für eine LIDAR-Vorrichtung bekannt.

Die US 2016/0170562 A1 beschreibt eine Lichtleiteranordnung für ein Touchdisplay. Es ist daher Aufgabe der Erfindung, eine kompaktere Bauform eines optoelektronischen Sensors zu ermöglichen.

Diese Aufgabe wird durch einen optoelektronischen Sensor gemäß Anspruch 1 sowie durch ein Verfahren zum Erfassen von Objekten gemäß Anspruch 11 gelöst. Der Sensor weist einen Lichtempfänger mit einer Empfangsoptik für Empfangslicht auf, das aus einer Lichteinfallsrichtung aus dem Überwachungsbereich einstrahlt. Die Empfangsoptik umfasst eine flache Lichtleiterplatte, die flächig zu dem Empfangslicht hin orientiert ist, bei der also eine erste Hauptfläche oder Flachseite quer zu der Lichteinfallsrichtung steht. In der Lichtleiterplatte wird dann das Empfangslicht in Richtung einer seitlichen Kante umgelenkt. Der Lichtempfänger ist an der seitlichen Kante angeordnet, wobei zwischen seitlicher Kante und Lichtempfänger auch noch weitere optische Elemente vorgesehen sein können.

Die Lichtleiterplatte ist mit einer diffraktiven Struktur versehen. Die Lichtleiterplatte wird so zu einem diffraktiven Flachkollektor, der mit seiner ersten Hauptfläche Empfangslicht einsammelt und zu der seitlichen Kante leitet. Die diffraktive Struktur sorgt für die Umlenkung, also die Richtungsänderung des Empfangslichts aus der Lichteinfallsrichtung in eine Richtung im Wesentlichen innerhalb der Ebene der Leiterplatte. Danach ist dann die Bedingung für Totalreflexion erfüllt, und so propagiert das Empfangslicht innerhalb der Ebene der Lichtleiterplatte zu der seitlichen Kante. Ohne die Umlenkung wäre die Bedingung für Totalreflexion wegen der Lichteinfallsrichtung quer, insbesondere fast senkrecht zur ersten Hauptfläche nicht erfüllt, und das Empfangslicht würde einfach aus der gegenüberliegenden zweiten Hauptfläche wieder austreten. Die diffraktive Struktur kann an der ersten Hauptfläche und/oder an der zweiten Hauptfläche angeordnet sein.

Die Erfindung geht von dem Grundgedanken aus, einen ortsauflösenden Lichtempfänger einzusetzen, also insbesondere mehrere diskrete Lichtempfangselemente wie beispielsweise Photodioden, ein PSD (Position Sensitive Device) oder eine Empfängerzeile oder -matrix mit einer Vielzahl von pixelartigen Lichtempfangselementen. Eine Steuer- und Auswertungseinheit zur Auswertung des Empfangssignals oder der Empfangssignale des Lichtempfängers bestimmt aus dem Auftreffort des Empfangslichts auf dem Lichtempfänger eine Abstandsinformation. Das kann ein Messwert für den Abstand sein, aber auch nur indirekt in die Auswertung einfließen, wie im Falle einer Abstandsklasse oder dergleichen, um beispielsweise ferne Objekte auszublenden.

Bei einem herkömmlichen Kollektor wird das Empfangslicht nur gesammelt und von einem einfachen Lichtempfangselement in ein Empfangssignal gewandelt. Jegliche Information wie Auftreffort oder Einfallswinkel, die für eine Abstandsmessung ähnlich einer Triangulation genutzt werden könnte, geht dabei verloren. Erfindungsgemäß werden hingegen eine oder mehrere Lichtleiterplatten so ausgestaltet, angeordnet und eingesetzt, dass sich eine Abstandsinformation doch mit einem ortsauflösenden Lichtempfänger gewinnen und in der Auswertung berücksichtigen lässt.

Die Erfindung hat den Vorteil, dass durch die Empfangsoptik mit dem diffraktiven Flachkollektor die Verbindung einer Empfangsoptik mit kleiner Bautiefe und großer Apertur ermöglicht wird, und zwar bei einer Bautiefe, die sogar sehr klein gegenüber der Empfangsapertur sein kann, da die von der Lichtleiterplatte eingenommene Fläche sehr groß werden kann. Die Empfangsoptik hat nur einen relativ kleinen Akzeptanzwinkel, der durch die Winkelselektivität der diffraktiven Struktur und den Grenzwinkel der Totalreflexion in der Lichtleiterplatter bestimmt ist. Zu schräg einfallendes Empfangslicht wird also nicht umgelenkt und in Totalreflexion weitergeleitet. Das ergibt eine laterale Sichtbereichseinschränkung oder eine Art Blendeneffekt, der jedoch bei einem auf eine Nutzlichtquelle ausgerichteten Sensor nur vorteilhaft ist. Die Erfindung ermöglicht, trotz des engen Akzeptanzwinkels eine Abstandsmessung oder Hintergrundausblendung anhand des Einfallswinkels vorzunehmen und damit das vorteilhafte flache Bauprinzip mit einem diffraktiven Flachkollektor auch bei entfernungsmessenden beziehungsweise nach einem Triangulationsprinzip arbeitenden Sensoren zu verwenden. Die diffraktive Struktur wirkt zusätzlich zu ihrer Umlenkungsfunktion als optisches Bandpassfilter, das auf eine bekannte Nutzlichtquelle abgestimmt werden kann und so das Signal-Rauschverhältnis bei Fremdlicht verbessert. Die Herstellung der Empfangsoptik ist sehr preiswert möglich, gerade bei hohen Stückzahlen, da ein werkzeuggebundenes Verfahren wie etwa UV-Abformen genutzt werden kann, bei dem hauptsächlich Einmalkosten für das Werkzeug selbst anfallen.

Der Sensor ist bevorzugt als hintergrundausblendender Lichttaster ausgebildet, bei dem der Lichtempfänger einen Nahbereich und einen Fernbereich aufweist und der einen Schaltausgang aufweist, dessen Schaltzustand davon abhängt, ob ein Objekt im Nahbereich erfasst ist. Ein hintergrundausblendender Lichttaster unterteilt den Überwachungsbereich in einen Vordergrund, in dem bei der Erfassung eines Objekts geschaltet werden soll, und einen auszublendenden Hintergrund. Die Umkehrung mit einer Vordergrundausblendung ist natürlich ebenso möglich. Die aus dem Empfangssignal gewonnene Abstandsinformation besteht in diesen Ausführungsformen nicht in einem konkreten Abstandsmesswert, sondern darin, dass ein Objekt in einem bestimmten Abstandsbereich erfasst ist, d.h. im Nah- oder Fernbereich. Dieses binäre Objektfeststellungsignal wird als Schaltsignal ausgegeben. Das Funktionsprinzip eines hintergrundausblendenden Lichttasters wurde einleitend kurz erläutert.

Der Sensor ist bevorzugt als Triangulationstaster ausgebildet, bei dem die Steuer- und Auswertungseinheit aus dem Auftreffort des Empfangslichts auf dem Lichtempfänger den Abstand des erfassten Objekts misst. Hier wird nun nach dem Prinzip der Triangulation ein Abstandsmesswert gewonnen und als Messgröße zur Verfügung gestellt. Die Erfindung ermöglicht sowohl für einen hintergrundausblendenden Lichttaster als auch für einen Triangulationstaster eine bisher unerreichbar flache Bauart.

Der Sensor weist bevorzugt einen Lichtsender in einer Triangulationsanordnung zu der Lichtleiterplatte auf. Obwohl grundsätzlich auch Empfangslicht von einer fremden oder kooperativ zugeordneten Lichtquelle gemessen werden kann, nutzt der Sensor vorzugsweise seinen eigenen Lichtsender in definierter Relativanordnung zur Lichtleiterplatte. Dadurch kann sichergestellt werden, dass sich je nach Abstand des erfassten Objekts ein messbarer Triangulationswinkel ergibt, dessen Parameter bekannt oder kalibriert sind. Die Position des Lichtsenders hängt von der konkreten Ausgestaltung des Lichtsenders ab. Beispielsweise wird der Lichtsender neben der Lichtleiterplatte oder den Lichtleiterplatten angeordnet, kann aber auch durch eine Öffnung in einer Lichtleiterplatte strahlen, die dann vorzugsweise zum Erzeugen der Triangulationswinkel dezentral angebracht ist.

Die diffraktive Struktur weist bevorzugt eine Gitterstruktur auf. Eine Gitterstruktur lässt sich relativ einfach vorgeben und auf der Lichtleiterplatte erzeugen. Besonders bevorzugt handelt es sich um ein Echelettegitter (Blazegitter), das einen Großteil der eingestrahlten Lichtenergie im gewünschten Spektrum in eine Ordnung beugt, die der gewünschten Umlenkung entspricht. Ein Echelettegitter ist folglich auf ein Nutzlichtspektrum abgestimmt, und bei der Umlenkung von Nutzlicht auf die seitliche Kante gibt es nur geringe Lichtverluste. Ein Echelettegitter hat demnach einen begrenzten Akzeptanzwinkelbereich, der in Kombination mit der Lichtleiterplatte nochmals verringert ist und weswegen auf den ersten Blick ein variierender Einfallswinkel, der für eine Triangulation unabdingbar ist, damit nicht vereinbar erscheint. Die Erfindung zeigt verschiedene Möglichkeiten auf, um dies doch zu realisieren.

Die Empfangsoptik weist mehrere flache Lichtleiterplatten auf, an deren seitlicher Kante jeweils ein Lichtempfangselement des Lichtempfängers angeordnet ist. Die bisher beschriebene Lichtleiterplatte wird anschaulich gesprochen vervielfacht, wobei zumindest die jeweilige diffraktive Struktur individuelle Anpassungen erfahren kann. Die Lichtleiterplatten sammeln weiterhin das auf sie treffende Empfangslicht auf einem Lichtempfangselement. Die Gesamtheit der Lichtempfangselemente, seien es diskrete Fotodioden oder Bereiche einer gemeinsamen Anordnung wie einer Empfängerzeile, bilden den ortsauflösenden Lichtempfänger, da durch die Identität des jeweiligen Lichtempfangselements unterscheidbar ist, welche Lichtleiterplatte das jeweilige Licht gesammelt hat. Die Anordnung von Lichtempfangselementen an einer Kante bezieht sich auf die optische Wirkung, es kann zwischen Kante und Lichtempfangselement noch weitere optische Elemente zur Umlenkung, Konzentration und dergleichen geben.

Die Lichtleiterplatten sind bezüglich einer Normalen auf ihre Hauptfläche zueinander verdreht angeordnet. Grundsätzlich liegen die Hauptflächen der mehreren Lichtleiterplatten parallel zueinander, vorzugsweise alle Lichtleiterplatten in derselben Ebene. Die Lichtleiterplatten sind aber in dieser Ausführungsform gegeneinander verdreht und damit die seitlichen Kanten, auf die das Empfangslicht jeweils umgelenkt wird, nicht zueinander parallel. Vorsichtshalber sei angemerkt, dass eine antiparallele Anordnung hier als nicht parallel aufgefasst wird. Aufgrund der Verdrehung lenken die diffraktiven Strukturen der verschiedenen Leiterplatten das Empfangslicht in unterschiedliche Richtungen, nämlich jeweils zu den nicht zueinander parallel ausgerichteten seitlichen Kanten.

Zwei Lichtleiterplatten sind bezüglich einer Normalen auf ihre Hauptfläche um 180° zueinander verdreht angeordnet. Das ist ein Spezialfall, bei dem die beiden Lichtleiterplatten von dem einfallenden Empfangslicht in einem Einfallswinkel desselben Betrags, aber unterschiedlichen Vorzeichens getroffen werden. Ein zugehöriger Lichtsender befindet sich vorzugsweise auf einer Mittellinie zwischen den Lichtleiterplatten, jedoch auf der Mittellinie dann nicht zentral, sondern seitlich versetzt, um einen Triangulationswinkel zu erzeugen. Die beiden Lichtleiterplatten erzeugen deshalb unterschiedliche Empfangssignale, weil die Koppeleffizienz auch bei gleichem Betrag des Einfallswinkels in Abhängigkeit vom Vorzeichen unterschiedlich ist. Für ein Vorzeichen steigt die Koppeleffizienz bei sich dem Akzeptanzwinkel näherndem Einfallswinkel nicht gleich einem Schalter binär von Null auf ein Maximum, sondern es bildet sich eine flache Flanke. Das liegt an sogenannten Doppeltreffern, die in der Figurenbeschreibung noch erläutert werden. Jedenfalls kann aufgrund dieser Asymmetrie bezüglich des Vorzeichens des Einfallswinkels aus dem Verhältnis der beiden Signale auf den Einfallswinkel und damit den Abstand des erfassten Objekts geschlossen werden.

Die Steuer- und Auswertungseinheit ist bevorzugt dafür ausgebildet, die Abstandsinformation aus einer Differenz des ersten Empfangssignals des der ersten Lichtleiterplatte zugeordneten Lichtempfangselements und des zweiten Empfangssignals des der zweiten Lichtleiterplatte zugeordneten Lichtempfangselements zu bestimmen, insbesondere aus dem Quotienten aus Differenz und Summe von erstem Empfangssignal und zweitem Empfangssignal. Das wertet das im Vorabsatz genannte Verhältnis der beiden Empfangssignale S1 und S2 von den beiden Lichtleiterplatten aus, in diesem Fall als Differenz S1-S2. Vorzugsweise erfolgt zudem eine Normierung auf den Gesamtpegel mit (S1-S2)/(S1+S2).

Die diffraktiven Strukturen der Lichtleiterplatten sind bevorzugt dafür ausgebildet, jeweils Empfangslicht mit einer Lichteinfallsrichtung eines Akzeptanzwinkelbereichs umzulenken, wobei die Akzeptanzwinkelbereiche der Lichtleiterplatten unterschiedlich sind. Die Akzeptanzwinkelbereiche wurden schon mehrfach angesprochen und sind bei einem Blaze- oder Echelettegitter besonders selektiv ausgeprägt. In dieser Ausführungsform sind nun mehrere Lichtleiterplatten mit jeweils unterschiedlichen Akzeptanzwinkeln für einen bestimmten Triangulationswinkel- und damit Abstandsbereich der erfassten Objekte zuständig. Die Lichtleiterplatten sind folglich unterschiedlich als Nah-und Fernelement, beziehungsweise eine beliebige Anzahl von Elementen für gestaffelte Abstände ausgebildet.

Der Lichtempfänger ist bevorzugt dafür ausgebildet, den Auftreffort des Empfangslichts an der seitlichen Kante einer Lichtleiterplatte zu bestimmen, wobei insbesondere nur eine einzige Lichtleiterplatte vorgesehen ist. Bei den bisher beschriebenen Ausführungsformen war jeweils ein Lichtempfangselement einer Lichtleiterplatte zugeordnet, das summarisch das einfallende Empfangslicht einsammelt und daraus ein gemeinsames Empfangssignal für diese Lichtleiterplatte erzeugt. Dabei war es egal, wo die seitliche Kante konkret getroffen wurde, beziehungsweise sie wurde überall angeleuchtet. In dieser Ausführungsform wird nun bereits für ein und dieselbe Lichtleiterplatte der Auftreffort auf die Lichtleiterplatte bestimmt. Dafür sind mehrere Lichtempfangselemente oder ein PSD derselben Lichtleiterplatte zugeordnet. Dann reicht auch schon eine einzige Lichtleiterplatte aus, um Abstände nach dem Triangulationsprinzip zu messen. Denkbar wäre aber auch eine Art Hybrid, bei dem mehrere Lichtleiterplatten sich den insgesamt abzudeckenden Abstandsbereich aufteilen, zugleich aber innerhalb des Zustandsbereichs mittels ortsauflösender Erfassung des Auftreffortes des einfallenden Empfangslichts Abstände trianguliert werden.

Der Hauptfläche ist vorzugsweise eine Blende vorgeordnet. Die Blende befindet sich vor oder auch direkt auf der Hauptfläche. Sie sorgt dafür, dass ein Lichtfleck entsteht, der eine Unterscheidung des Auftrefforts auf dem ortsauflösenden Lichtempfänger zulässt.

Der Lichtsender ist vorzugsweise bezüglich der Lichtleiterplatte derart angeordnet, dass die Lichteinfallsrichtung mit dem Abstand des erfassten Objekts in einem Winkel quer zu der Richtung zur seitlichen Kante hin variiert. Die Normale auf die Hauptfläche kann in zwei Winkeln Θ, ϕ beschrieben werden. Der Winkel Θ liegt dabei in einer ersten Ebene, in der die Hauptfläche und eine Senkrechte auf die seitliche Kante liegt, also die Hauptumlenkrichtung. Der Winkel ϕ liegt in einer zweiten Ebene senkrecht zu der Hauptfläche und der ersten Ebene. In den bisher beschriebenen Ausführungsformen wurde der Winkel Θ, bezüglich dessen auch der Akzeptanzwinkel der diffraktiven Struktur definiert ist, für die Abstandsmessung genutzt. In dieser Ausführungsform ist es nun der Winkel ϕ senkrecht dazu. Dementsprechend ist die Anordnung des Lichtsenders bezüglich der Lichtleiterplatte zu drehen. In der ϕ-Richtung wirkt die diffraktive Struktur quasi wie ein Spiegel. Deshalb wird der hier als Triangulationswinkel fungierende Winkel ϕ bei der Umlenkung durch die diffraktive Struktur in einen Winkel δ als Abweichung von einem senkrechten Auftreffen auf die seitliche Kante übersetzt. Der Winkel δ bestimmt dann, wo der Empfangslichtfleck auf die seitliche Kante und damit den dort angeordneten ortsauflösenden Lichtempfänger fällt. Es sei noch ergänzt, dass die optische Wirkung der diffraktiven Struktur auf den Winkel ϕ zwar einem Spiegel ähnelt, mit einem tatsächlichen Spiegel jedoch kein vergleichbar flacher Aufbau des Sensors erreicht werden könnte.

Der Lichtsender ist bevorzugt bezüglich der Lichtleiterplatte derart angeordnet, dass die Lichteinfallsrichtung in einen Akzeptanzwinkelbereich der diffraktiven Struktur fällt. Mit den im Vorabsatz definierten Winkeln bedeutet dies, dass nicht nur dafür gesorgt wird, dass der Winkel ϕ mit dem Abstand des erfassten Objekts variiert und dies von dem ortsauflösenden Lichtempfänger gemessen werden kann. Zusätzlich soll nun die diffraktive Struktur auch in ihrem optimalen Bereich arbeiten und eine hohe Koppeleffizienz für das variierende ϕ über einen breiten ϕ-Bereich haben. Das ist der Fall, wenn die andere Komponente Θ des Einfallswinkels möglichst dem Akzeptanzwinkelbereich entspricht, insbesondere Θ=0 gilt. Bei nicht gut an den Akzeptanzwinkelbereich angepasstem Θ ist natürlich die Lichtausbeute geringer, was aber für gewisse Winkelabweichungen noch hinzunehmen wäre. Es sinkt jedoch dabei der nutzbare ϕ-Bereich drastisch, und deshalb sollte Θ vorzugsweise möglichst optimal dem designten Akzeptanzwinkel der diffraktiven Struktur entsprechen.

Die Empfangsoptik weist bevorzugt ein an der seitlichen Kante einer jeweiligen Lichtleiterplatte angeordnetes Trichterelement auf. Das Trichterelement, auch als getapertes Element oder kurz Taper bezeichnet, hat an der Lichteintrittsseite einen der seitlichen Kante entsprechenden Querschnitt, der sich zur Lichtaustrittsseite hin verjüngt. An der Lichtaustrittsseite ist der Lichtempfänger beziehungsweise dessen jeweiliges Lichtempfangselement angeordnet, wobei sich dazwischen noch weitere optische Elemente befinden können. Mit der Kombination aus Lichtleiterplatte und Trichterelement ist die Empfangsoptik als diffraktiver Flachkollektor mit refraktiv getaperter Optik ausgebildet.

Das Trichterelement ist bevorzugt flach ausgebildet und mit seiner Flächenrichtung in der Verlängerung der Hauptfläche ausgerichtet. Das Trichterelement schließt sich so direkt an die Lichtleiterplatte an und setzt die Hauptfläche fort, wobei ein gewisser Winkel aus der Ebene der Hauptfläche heraus denkbar ist. Das Empfangslicht ist ausgangs des Trichterelements in beiden Querschnittsrichtungen konzentriert. In der einen Achse senkrecht zu der Hauptfläche und dem Trichterelement sorgt dafür die diffraktive Struktur und die meist mehrfache Totalreflexion innerhalb der Ebene der Hauptfläche der flachen Lichtleiterplatte. Der Querschnitt des Empfangslichts ist daher nur noch so hoch wie die geringe Dicke der Lichtleiterplatte. In der zweiten Achse längs der seitlichen Kante verjüngt sich das Trichterelement und sorgt so für die Konzentration.

Lichtleiterplatte und Trichterelement sind bevorzugt einstückig ausgebildet. Das führt zu einem besonders einfachen Aufbau. Das Trichterelement setzt so die Lichtleiterplatte nicht nur optisch fort, sondern bildet auch ein gemeinsames Bauteil.

Das Trichterelement weist bevorzugt eine nichtlineare Verjüngung auf. Dadurch kann die Konzentrationswirkung weiter verbessert oder eine kürzere Länge des Trichterelements ermöglicht werden. Eine lineare Verjüngung würde bedeuten, dass das Trichterelement in der Draufsicht parallel zur Lichteinfallsrichtung ein Trapez darstellt. Nichtlinear ist beispielsweise eine parabolische Form oder eine beliebige Freiform, bei der aber die seitlichen Flanken monoton nach innen weisen, um die das Trichterelement definierende Verjüngung beziehungsweise den Konzentrationseffekt zu erreichen.

Das Trichterelement ist bevorzugt verspiegelt. Dadurch kann es nur innere Reflexionen und keine Lichtverluste geben. Anders als die reine Totalreflexion hängt das nicht von Material und Reflexionswinkel ab.

An einem der Lichtleiterplatte gegenüberliegenden Ende des Trichterelements ist bevorzugt ein Umlenkelement angeordnet. Das Umlenkelement sorgt besonders bevorzugt für eine Umlenkung zurück in die Lichteinfallsrichtung, also quer und insbesondere nahezu senkrecht zu der ersten Hauptfläche. Mit anderen Worten ist die Ausbreitungsrichtung des Empfangslichts nach dem Umlenkelement diejenige, mit der Empfangslicht auch aus einer herkömmlichen Empfangslinse austreten würde, jedoch um die Ausdehnung von Lichtleiterplatte und Trichterelement lateral versetzt. Das am Umlenkelement austretende Strahlbündel wird außerdem deutlich größere Ausfallswinkel haben, aber wenn dort direkt oder nahe genug der Lichtempfänger sitzt, wirkt sich diese Verbreiterung nicht weiter aus. Der Vorteil eines solchen Umlenkelements ist, dass der Lichtempfänger so orientiert sein kann wie in einem herkömmlichen Sensor mit der Ebene der lichtempfindlichen Fläche parallel zu der ersten Hauptfläche. Damit kann eine Leiterplatte, auf welcher der Lichtempfänger angeordnet ist, parallel zu der Hauptfläche ausgerichtet sein. Die Leiterplatte beansprucht so kaum Bautiefe, da ihre Flächenausdehnung die Bautiefe nicht betrifft. Am Ausgang des Trichterelements, ohne Umlenkelement, müsste der Lichtempfänger quer oder im Wesentlichen senkrecht zu der ersten Hauptfläche angeordnet sein, was bei der Erzielung einer geringen Bautiefe des gesamten Sensors hinderlich wäre. Als Umlenkelement kommt beispielsweise ein Prisma in Betracht, alternativ ein gebogenes Anhangstück des Trichterelements. Das Umlenkelement kann verspiegelt werden, um die Effizienz zu verbessern.

Das Umlenkelement weist bevorzugt Strahlformungseigenschaften auf. Besonders vorteilhaft sind konzentrierende oder fokussierende Strahlformungseigenschaften, um den Querschnitt des Empfangslichts bei Auftreffen auf den Lichtempfänger weiter zu verringern. Dazu kann ein als Prisma ausgebildetes Umlenkelement gekrümmte Flächen mit sphärischer Krümmung, asphärischer Krümmung oder einer Freiform aufweisen.

Die Gitterstruktur ist vorzugsweise linear. Das ist eine besonders einfache diffraktive Struktur, die bei geeigneter Orientierung die gewünschte Umlenkung aus der Lichteinfallsrichtung in die Ebene der Hauptfläche bewirkt. In einer alternativen bevorzugten Ausführungsform weist die Lichtleiterplatte eine nichtlineare Gitterstuktur als diffraktive Struktur auf, um das Empfangslicht zusätzlich in der Ebene der ersten Hauptfläche nach Innen umzulenken. Eine solche nichtlineare Gitterstruktur erfüllt zunächst die primäre Aufgabe der Umlenkung des Empfangslichts hin zu der seitlichen Kante und damit dem Lichtempfänger oder dem Trichterelement. Zusätzlich sorgt aber die nichtlineare, beispielsweise gebogene Gitterstruktur auch für eine Umlenkung innerhalb der Ebene parallel zu der ersten Hauptfläche nach Innen. Eine solche nichtlineare Gitterstruktur ist etwas komplexer zu bestimmen und herzustellen. Sie unterstützt aber die Konzentrationswirkung des optischen Trichterelements, das dementsprechend kürzer ausfallen kann, oder sie ersetzt es sogar.

Die Lichtleiterplatte weist bevorzugt mindestens zwei Segmente auf, deren Gitterstrukturen unterschiedlich ausgerichtet sind, um das Empfangslicht zusätzlich in der Ebene der ersten Hauptfläche nach Innen umzulenken. Die Segmente sind von Trennlinien durch die erste Hauptfläche quer zu der seitlichen Kante unterteilt, sind also eine Art Streifen, deren Schmalseiten gemeinsam die seitliche Kante bilden. Bis auf ein mögliches zentrales Segment sind die Segmente oder zumindest deren Gitterstrukturen etwas zur Mitte der seitlichen Kante hin geneigt. Ähnlich wie bei einer passenden nichtlinearen Gitterstruktur ergibt sich so schon eine Konzentrationswirkung in der Lichtleiterplatte, die das Trichterelement unterstützt oder ersetzt. Die Gitterstrukturen sind hier vorzugsweise linear, die Umlenkung nach Innen erfolgt dann anders als bei einer nichtlinearen Gitterstruktur nur aufgrund der unterschiedlichen Ausrichtung. Es ist auch denkbar, Segmente zu bilden und trotzdem nichtlineare Gitterstrukturen je Segment vorzusehen. Dann ergänzen die Konzentrationswirkungen der nichtlinearen Gitterstruktur und der nach Innen gerichteten Ausrichtung der jeweiligen Gitterstruktur einander.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Ansicht eines optoelektronischen Sensors mit einem Flachkollektor als Empfangsoptik;
- Fig. 2: eine schematische Ansicht einer weiteren Ausführungsform eines optoelektronischen Sensors als Lichttaster oder Reflexionslichtschranke;
- Fig. 3: eine schematische Draufsicht auf eine als Flachkollektor ausgebildete Empfangsoptik;
- Fig. 4: eine dreidimensionale Ansicht eines beispielhaften Strahlenverlaufs in einer Empfangsoptik gemäß Figur 3;
- Fig. 5: eine weitere Darstellung des Strahlverlaufs in der Empfangsoptik zur Erläuterung von Doppeltreffern;
- Fig. 6: eine Darstellung, welche Einfallswinkel Θ bei welchem lateralen Ort X auf dem Flachkollektor zu einem Lichtempfang führen und welche nicht; Fig. 7 eine Darstellung der Koppeleffizienz des Flachkollektors in Abhängigkeit vom Einfallswinkel Θ;
- Fig. 8: eine Darstellung einer um 180° zueinander verdrehten Anordnung von zwei Flachkollektoren für eine Abstandsmessung;
- Fig. 9: eine schematische Darstellung des gemäß dem Triangulationsprinzip wandernden Auftrefforts des Empfangslichts auf einem Lichtempfänger;
- Fig. 10: einen aus mehreren Flachkollektoren aufgebauten ortsaufgelösten Lichtempfänger zur Abstandsmessung nach dem Triangulationsprinzip;
- Fig. 11a-d: verschiedene Anordnungen zueinander verdrehter Flachkollektoren für eine Abstandsmessung nach dem Triangulationsprinzip;
- Fig. 12: eine Draufsicht auf einen Flachkollektor zur Erläuterung einer Abstandsmessung mit nur einem Flachkollektor bei einer um 90° verdrehten Anordnung von Lichtsender zu Flachkollektor, um eine senkrechte Winkelkomponente ϕ der Einfallsrichtung des Empfangslichts für eine Triangulation zu nutzen;
- Fig. 13: eine Skizze zur Erläuterung der Winkelkomponente ϕ;
- Fig. 14: eine dreidimensionale Ansicht ähnlich Figur 4, jedoch in variierter Perspektive und bei einer Empfangsoptik mit einem zusätzlichen ausgangsseitigen Umlenkelement;
- Fig. 15: eine schematische Draufsicht auf eine als Flachkollektor ausgebildete Empfangsoptik mit nichtlinearer Gitterstruktur;
- Fig. 16: eine schematische Draufsicht auf eine als Flachkollektor ausgebildete Empfangsoptik mit mehreren Segmenten; und
- Fig. 17: eine dreidimensionale Ansicht eines beispielhaften Strahlenverlaufs in einer Empfangsoptik gemäß Figur 16.

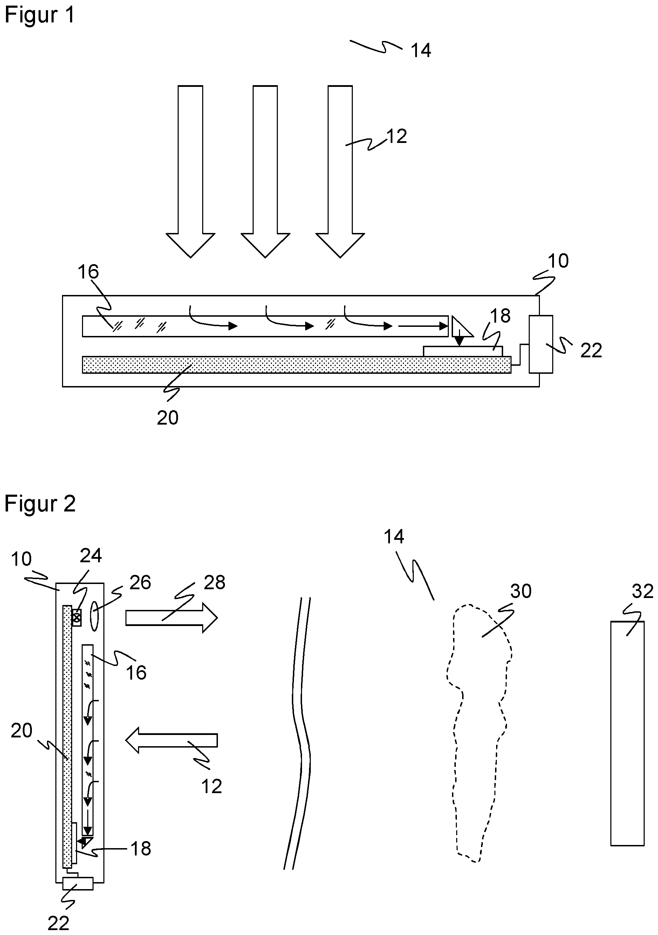

Figur 1 zeigt eine schematische Blockdarstellung eines optoelektronischen Sensors 10. Empfangslicht 12 aus einem Überwachungsbereich 14 fällt mit einer Lichteinfallsrichtung entsprechend den Pfeilen auf eine flache Empfangsoptik 16 mit großer Apertur, um möglichst viel Empfangslicht 12 einzusammeln. Die Empfangsoptik 16 lenkt das Empfangslicht 12 zunächst seitlich um und dann ein weiteres Mal zurück in die Lichteinfallsrichtung, ehe es auf einen Lichtempfänger 18 trifft. Die zweite Umlenkung ist optional, andernfalls ist der Lichtempfänger 18 senkrecht orientiert.

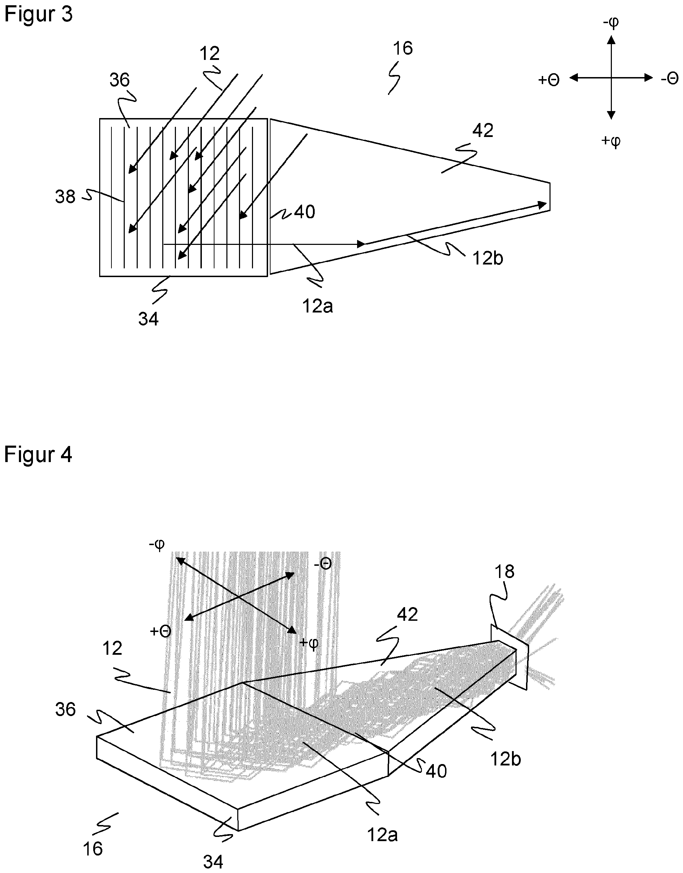

Die Empfangsoptik 16 und deren Lichtumlenkung werden später in verschiedenen Ausführungsformen unter Bezugnahme auf die Figuren 3 bis 17 näher erläutert. Vorläufig ist nur deren grobe geometrische Gestalt von Interesse, nämlich dass sie besonders flach ist.

Der Lichtempfänger 18 erzeugt aus dem auftreffenden Empfangslicht 12 ein elektronisches Empfangssignal, das einer Steuer- und Auswertungseinheit 20 zugeführt wird. In Figur 1 ist die Steuer- und Auswertungseinheit 20 nur symbolisch als Leiterplatte gezeigt, auf der auch der Lichtempfänger 18 angeordnet ist. Allgemein handelt es sich um beliebige analoge und/oder digitale Auswertungsbausteine, wie etwa einen oder mehrere Analogschaltungen, Mikroprozessoren, FPGAs oder ASICs mit oder ohne analoge Vorverarbeitung.

Die parallele Ausrichtung von Empfangsoptik 16, Lichtempfänger 18 und der Leiterplatte mit der Steuer- und Auswertungseinheit 20, auf der auch sonstige Elektronik untergebracht sein kann, erlaubt einen Gesamtaufbau des optoelektronischen Sensors in der gezeigten Flachbauweise mit äußerst geringer Bautiefe von nur wenigen Millimetern.

Aufgrund der Umlenkung erhält die Steuer- und Auswertungseinheit 20 ein summarisches Intensitätssignal, das sich für Auswertungen eignet, in denen die Lichtfleckgeometrie oder eine Winkelinformation des einfallenden Empfangslichts 12 nicht benötigt wird. Ein Beispiel ist ein Schwellwertvergleich, um die Anwesenheit von Objekten festzustellen. Auch Lichtlaufzeitmessungen sind denkbar, sofern die Genauigkeitsanforderungen nicht zu hoch sind, da sich im Millimeterbereich unterschiedliche Lichtwege in der Empfangsoptik 16 mischen. Das Ergebnis der Auswertung, beispielsweise ein dem binären Objektfeststellungssignal entsprechendes Schaltsignal oder ein gemessener Abstand, kann an einer Schnittstelle 22 ausgegeben werden.

Der in Figur 1 dargestellte Sensor 10 ist passiv, empfängt also Empfangslicht 12 einer beliebigen Quelle. Stattdessen kann jedoch auch Empfangslicht 12 von einem zugeordneten Lichtsender empfangen werden. Im Falle einer Einweglichtschranke befindet sich der Lichtsender auf der gegenüberliegenden Seite des Überwachungsbereichs 14, und die Steuer- und Auswertungseinheit 20 kann Objekte im Strahlweg an einem Intensitätsabfall erkennen, weil sie den Lichtsender verdecken.

Figur 2 zeigt eine weitere Ausführungsform eines optoelektronischen Sensors 10 mit einem eigenen Lichtsender 24 samt zugeordneter Sendeoptik 26. Das Empfangslicht 12 ist in diesem Fall das eigene Sendelicht 28, nachdem es im Überwachungsbereich 14 zurückgeworfen wurde. Das ist das Prinzip eines Lichttasters, der ein Objekt 30 erkennt, wenn das Sendelicht 28 darauf fällt und remittiert wird. Es ist aber auch das Funktionsprinzip einer Reflexionslichtschranke, zu der noch ein kooperativer Reflektor 32 gehört, auf den das Sendelicht 28 ausgerichtet ist. Die Steuer- und Auswertungseinheit 20 erwartet in diesem Fall das von dem Reflektor 32 zurückgeworfene Empfangslicht 12. Schiebt sich ein Objekt 30 vor den Reflektor 32, so fällt der Empfangspegel ab, und daran kann das Objekt 30 erkannt werden, erneut beispielsweise durch Schwellwertvergleich. Um das eigene Sendelicht 28 von Fremdlicht zu unterscheiden und so das Schaltverhalten wesentlich robuster zu machen, können im Sende- und Empfangspfad zwei Polarisationsfilter angeordnet sein, deren Polarisationsrichtung entsprechend einer Polarisationsdrehung des Reflektors 32 gekreuzt ist.

Figur 3 zeigt eine schematische Draufsicht auf die Empfangsoptik 16. Das Empfangslicht 12 ist symbolisch durch eine Vielzahl von Pfeilen dargestellt, deren Einfallsrichtung im Wesentlichen senkrecht zur Papierebene ist, was nur perspektivisch angedeutet werden kann.

Die Empfangsoptik 16 weist eine flache Lichtleiterplatte 34 oder einen Flachkollektor auf. In der Draufsicht ist von der flachen Lichtleiterplatte 34 nur die obere Hauptfläche 36 oder Flachseite zu erkennen. In Tiefenrichtung senkrecht zur Papierebene ist die Lichtleiterplatte 34 sehr dünn, ihre Dicke ist um Faktoren geringer als die laterale Ausdehnung der Hauptfläche 36. Mit der Hauptfläche 36 sammelt die Lichtleiterplatte 34 Empfangslicht 12 mit sehr großer Apertur ein.

Eine diffraktive Struktur 38 auf der Lichtleiterplatte 34 sorgt für eine Umlenkung des Empfangslichts 12 hin zu einer seitlichen Kante 40. Die diffraktive Struktur 38 kann oben an der ersten Hauptfläche 36 und/oder unten an der gegenüberliegenden Flachseite angeordnet sein. Nach der Umlenkung propagiert Empfangslicht 12a in einer neuen Richtung, in Figur 3 nach rechts, innerhalb der Lichtleiterplatte 34, und wird dabei durch Totalreflexion geführt. Die seitliche Kante 40 ist nicht notwendig nur ein einziges gerades Teilstück, sondern kann auch nur stückweise gerade mit Kantensegmenten in einem Winkel nahe 180° zueinander oder gebogen sein.

Die diffraktive Struktur 38 kann insbesondere ein Echelettegitter (Blazegitter) sein. Ein solches Echelettegitter beugt einfallendes Empfangslicht 12 einer definierten Wellenlänge sehr stark und fast nur in eine bestimmte Beugungsordnung. Die Beugung ist also chromatisch selektiv, was zugleich den Vorteil einer optischen Bandpasswirkung bietet, die auf einen eigenen Lichtsender 24 abgestimmt werden kann. Die Beugung ist außerdem wegen des starken Maximums in einer Beugungsordnung sehr richtungsspezifisch. Dadurch entsteht eine neue Vorzugsrichtung des Lichtstrahlenbündels hin zu der seitlichen Kante 40 unter so flachen Winkeln, dass das umgelenkte Empfangslicht 12a aufgrund von Totalreflexion in der Lichtleiterplatte 34 bleibt. In die Richtung der weiteren Kanten der Lichtleiterplatte 34 wird kein Empfangslicht 12 gebeugt, so dass dort auch nichts verlorengeht. Es wäre aber auch möglich, hier eine Spiegelbeschichtung anzubringen.

Das Empfangslicht 12 fällt mit zumindest einer Komponente längs der Normalen auf die Papierebene auf die Empfangsoptik 16. Die Abweichungen von der Normalen werden hier und im Folgenden über zwei Winkel Θ und ϕ beschrieben. Beide Winkel Θ, ϕ werden, da sie sich auf die genannte Normale beziehen, in einer ersten und zweiten Ebene senkrecht zur Hauptfläche der Empfangsoptik 16 beziehungsweise in Figur 3 der Papierebene gemessen. Die erste Ebene des Winkels Θ umfasst zudem die Hauptablenkrichtung des umgelenkten Empfangslichts 12 hin zu der seitlichen Kante 12 und ist in Figur 3 eine horizontale Ebene senkrecht zur Papierebene. Die zweite Ebene des Winkels ϕ seht senkrecht zu der ersten Ebene und ist in Figur 3 eine vertikale Ebene senkrecht zur Papierebene.

An die Einkopplung in die Lichtleiterplatte 34 durch die diffraktive Struktur 38 und somit die Umlenkung in der Lichtleiterplatte 34 zu der seitlichen Kante 40 schließt sich optional eine zweite Licht sammelnde oder konzentrierende Funktion an. Dazu ist an der seitlichen Kante 40 vorzugsweise ein optisches Trichterelement 42 angeordnet. Das optische Trichterelement 42 ist ein sich im Querschnitt verjüngendes Bauteil, welches das in einer Querrichtung des Trichterelements 42 parallel zur Ausdehnung der seitlichen Kante 40 konzentrierte Empfangslicht 12b erzeugt.

Der Strahlverlauf in der Empfangsoptik 16 wird durch ein simuliertes Beispiel besser verständlich, das in Figur 4 in einer dreidimensionalen Ansicht gezeigt ist. Hier sind auch erneut die beiden Winkel Θ und ϕ eingezeichnet, mit denen die jeweilige Einfallsrichtung beschrieben werden kann. Das mit den Abweichungen in Θ und ϕ grob senkrecht einfallende Empfangslicht 12 wird an der Ober- beziehungsweise Unterseite durch die diffraktive Struktur 38 gebeugt und als umgelenktes Empfangslicht 12a zu der seitlichen Kante 40 geleitet. In dem optischen Trichterelement 42 wird daraus konzentriertes Empfangslicht 12b, das auf den an einer Strahlaustrittsstelle des Trichterelements 42 angeordneten Lichtempfänger 18 fällt.

Somit wird das Empfangslicht 12 in beiden Querschnittsrichtungen konzentriert. In einer Höhenrichtung ist die Ausdehnung durch die geringe Dicke der Lichtleiterplatte 34 begrenzt, die sich in dem optischen Trichterelement 42 fortsetzt oder die dort sogar noch weiter verringert wird. In der Breitenrichtung, parallel zu der seitlichen Kante, greift die Fokussierungs- oder Konzentrationswirkung durch die querschnittsverringernde Geometrie des optischen Trichterelements 42. Beide Achsen erfüllen die Bedingung der wellenleitergeführten Totalreflexion. Lichtleiterplatte 34 und optisches Trichterelement 42 sind aus geeignetem transparentem Kunststoff hergestellt, wie PMMA oder PC. Zur Unterstützung der Totalreflexion können Spiegelbeschichtungen angebracht werden.

Das optische Trichterelement 42 ist vorzugsweise ebenso flach aufgebaut wie die Lichtleiterplatte 34 und schließt so unmittelbar an die Form der seitlichen Kante 40 an. Es ist möglich, beides einstückig auszubilden. Um die Strahlformung in dem optischen Trichterelement 42 weiter zu optimieren, kann die Verjüngung auch einen parabolischen oder anderen, zulaufenden Querschnittsverlauf haben.

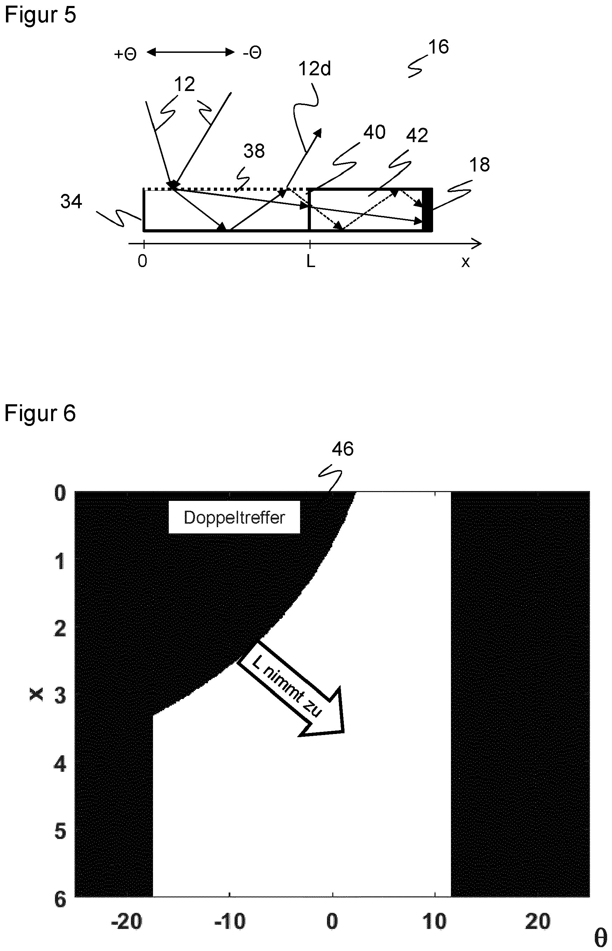

Es wurde erläutert, dass die Lichtleiterplatte 34 und das optionale Trichterelement das Empfangslicht 12 sammeln und demnach der Lichtempfänger nur ein gemeinsames Empfangssignal erzeugt. Erfindungsgemäß soll aber ein Abstand mit einem Triangulationsprinzip gemessen werden und dafür zwischen verschiedenen Einfallswinkeln unterschieden werden. Zunächst wird deshalb der Lichtempfänger 18 ortsauflösend ausgelegt, d.h. aus mehreren diskreten Lichtempfängern, beispielsweise Photodioden, als PSD (Position Sensitive Device) oder integrierte Empfangspixelanordnung etwa in Form einer Empfängerzeile. Das allein würde aber noch nicht ans Ziel führen, da das am Lichtempfänger 18 ankommende Empfangslicht 12b die gewünschte Ortsinformation aufgrund der lichtsammelnden Eigenschaften der Empfangsoptik 16 gar nicht mehr enthält. Um die verschiedenen Ausführungsformen zu verstehen, mit denen doch eine ortsaufgelöste Erfassung und damit eine Art Triangulation erreicht wird, soll zunächst unter Bezugnahme auf die Figuren 5 bis 7 die Lichtführung in der Lichtleiterplatte 34 noch genauer beschrieben werden.

Dazu zeigt zunächst Figur 5 nochmals eine Längsschnittansicht der Einkopplung von Empfangslicht 12 in die Empfangsoptik 16 und der Strahlverläufe darin. Das Empfangslicht 12 trifft unter dem Winkel Θ auf die diffraktive Struktur 38, die eine Länge L aufweist, und wird in Richtung auf den Lichtempfänger 18 gebeugt. Dazu wird eine von Null verschiedene Beugungsordnung genutzt, typischerweise die erste Beugungsordnung, wobei die diffraktive Struktur 38 vorzugsweise derart optimiert ist, dass praktisch alles Empfangslicht 12 in dieser Beugungsordnung gebeugt wird. Für zu große Winkel Θ außerhalb eines Akzeptanzwinkelbereichs erreicht praktisch kein Empfangslicht 12 mehr den Lichtempfänger 18. Je nach Auftreffort, Winkel Θ, Länge L und Auslegung der diffraktiven Struktur 38 kann es dazu kommen, dass ein einfallender Lichtstrahl 12 die diffraktige Struktur zweimal trifft, ein sogenannter Doppeltreffer. Das ist in Figur 5 für den Lichtstrahl 12d gezeigt. Solche Lichtstrahlen 12d werden zum größten Teil ausgekoppelt und gehen für die Detektion zu einem erheblichen Teil verloren, denn der beim Doppeltreffer an der diffraktiven Struktur 38 reflektierte Anteil ist deutlich geschwächt.

Figur 6 ist eine kompakte Darstellung der Einkopplungs- und Führungseigenschaften der Lichtleiterplatte 36 ohne Trichterelement 42. Auf der X-Achse ist der Einfallswinkel Θ, auf der Y-Achse der laterale Auftreffort X des Empfangslichts 12 auf der Lichtleiterplatte 34 aufgetragen, siehe auch nochmals Figur 5 für die Definition von Θ und X. Schwarze Bereiche des gezeigten Parameterraums stehen für keine oder nur eine stark geschwächte Lichtführung bis hin zu dem Lichtempfänger 18, umgekehrt weiße Bereiche für eine hohe Kopplung auf den Lichtempfänger 18.

Die beiden schwarzen Streifen rechts und links entsprechen einem nicht angepassten Einfallswinkel Θ: entweder ist im linken Bereich nach dem Umlenken die Bedingung für Totalreflexion nicht mehr erfüllt, so dass das Empfangslicht 12 nicht in der Lichtleiterplatte 34 geführt wird, oder es erfolgt im rechten Bereich eine Beugung nur noch streifend oder gar nicht mehr. Dieser Akzeptanzbereich kann durch Eigenschaften der diffraktiven Struktur 38, insbesondere deren Periode, die Wellenlänge des Empfangslichts 12 sowie den Brechungsindex des Materials der Lichtleiterplatte 34 verändert werden.

Der kreissegmentartige Doppeltrefferbereich 46 wird durch die Auftreffposition und damit die makroskopische Geometrie der Lichtleiterplatte 34 und der Anordnung in dem Sensor 10 bestimmt. Insbesondere wächst dieser Bereich mit zunehmender Länge L der diffraktiven Struktur und umgekehrt. Von besonderem Interesse ist, dass der Doppeltrefferbereich 46 praktisch nur bei negativem Θ liegt. Das führt zu einer Asymmetrie in der Koppeleffizienz bei betragsgleichem, aber im Vorzeichen verschiedenen Θ, die sogleich genauer untersucht werden soll.

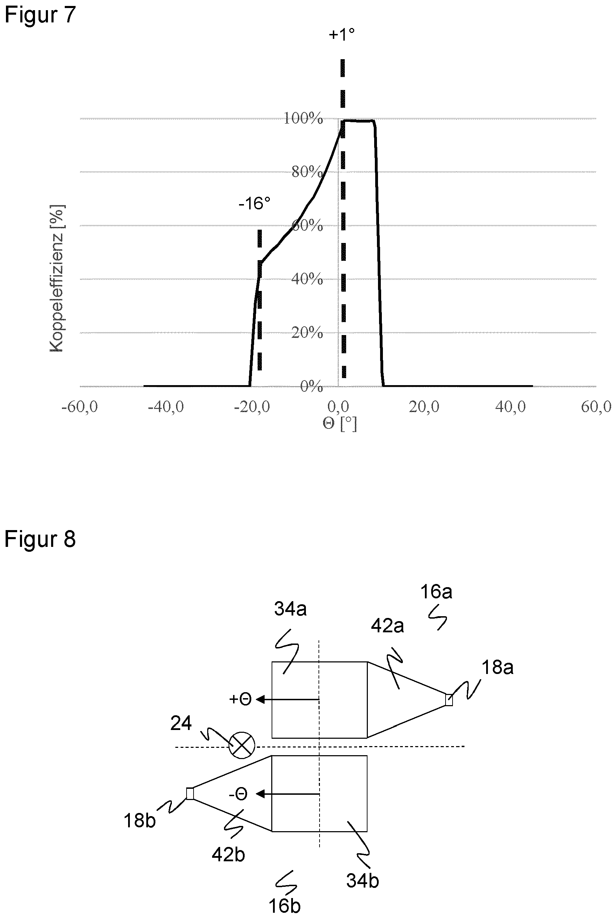

Dazu ist in Figur 7 die Koppeleffizienz in Abhängigkeit von Θ für eine beispielhafte Lichtleiterplatte 34 mit einer diffraktiven Struktur 38 mit einem Gitter der Periode 500 nm und einer Länge L=5 mm sowie einem 10 mm langen Trichterelement 42 aufgetragen. Die gezeigte winkelabhängige Koppelfunktion ist nur ein Beispiel, sie kann durch das Design der diffraktiven Struktur 38 sowie der Bauform der Lichtleiterplatte 34 beeinflusst werden.

In einem einfachen Modell einer winkelselektiven diffraktiven Struktur 38, wie einem Blazegitter, wäre hier eine symmetrische Anordnung zu erwarten, bei der die Koppeleffizienz zu beiden Seiten ab einem bestimmten Winkel Θ abrupt abfällt. Tatsächlich zeigt sich aber für negative Winkel Θ eine recht flache Flanke, die bei ca. -16° beginnt und sogar noch in den positiven Bereich bei +1° hineinreicht. Dies lässt sich als eine Art Arbeitsbereich nicht-konstanter Koppeleffizienz ausnutzen, um den Einfallswinkel zu messen und damit einen Abstand zu triangulieren.

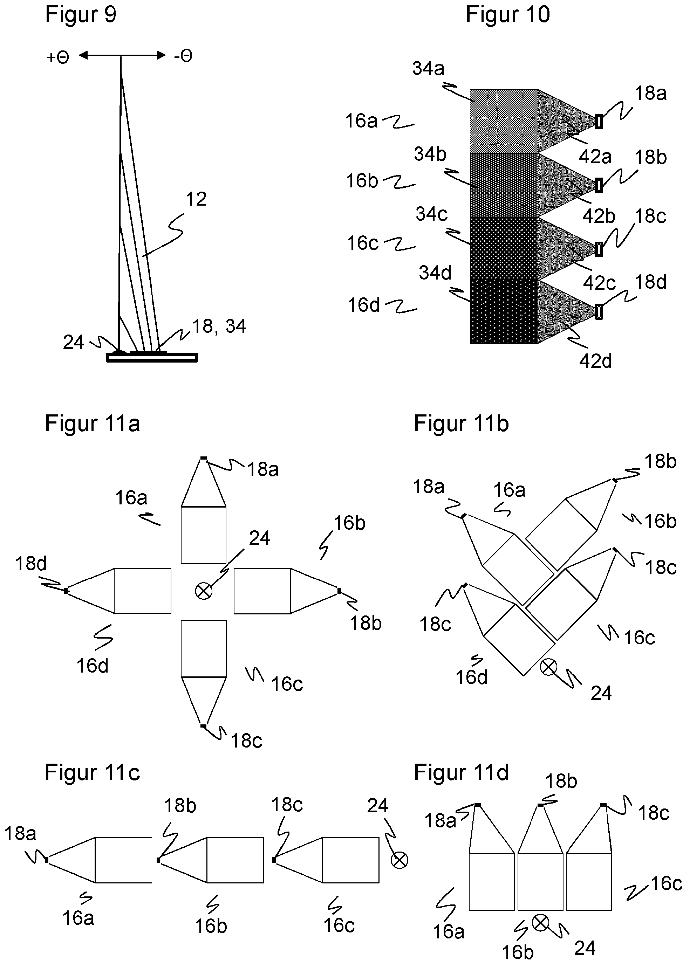

Figur 8 zeigt eine Draufsicht auf eine erfindungsgemäße Anordnung zweier Teilempfangsoptiken 16a-b mit jeweils einer Lichtleiterplatte 34a-b und einem optionalen Trichterelement 42a-b. Sie sammeln jeweils das Empfangslicht 12 auf einem eigenen Lichtempfangselement 18a-b. Die beiden Lichtempfangselemente 18a-b bilden gemeinsam einen ortsaufgelösten Lichtempfänger 18, da die Empfangssignale der Lichtempfangselemente 18a-b unterschieden werden. Alternative Anordnungen von Teilempfangsoptiken 16a-b und Lichtempfangselementen 18a-b werden später unter Bezugnahme auf die Figur 11a-d erläutert.

Wie an Figur 7 gesehen, ist die Koppeleffizienz asymmetrisch bezüglich des Winkels Θ, wobei diese Asymmetrie eine direkte Folge der Doppeltreffer beziehungsweise des Doppeltrefferbereichs 46 ist. Die beiden um 180° gedrehten Teilempfangsoptiken 16a-b erzeugen daher bei aus einem bestimmten Winkel Θ einfallenden Licht unterschiedliche Empfangssignale. Aus einem Vergleich der beiden Empfangssignale S1 und S2 der Lichtempfangselemente 18a-b kann deshalb auf den Winkel Θ zurückgeschlossen werden. Beispielsweise wird die Differenz S1-S2 gebildet oder für Unabhängigkeit vom Gesamtpegel vorzugsweise der Signalkontrast (S1-S2)/(S1+S2). Die beiden Empfangssignale S1 und S2 können als Nahsignal und Fernsignal bezeichnet werden, weil der Winkel Θ von dem Abstand des erfassten Objekts abhängt, welches das Empfangslicht 12 zurückwirft.

Alternativ oder zusätzlich zur beschriebenen Ausnutzung der Asymmetrie der Koppeleffizienz ist auch denkbar, mehrere diffraktive Strukturen 38 mit verschiedenen Akzeptanzwinkeln zu verwenden und dadurch die verschiedenen möglichen Einfallswinkel Θ durch mehrere Teilempfangsoptiken auf verschiedene Lichtempfangselemente zu sortieren.

Dazu zeigt Figur 9 zunächst nochmals, wie sich der Einfallswinkel Θ mit dem Objektabstand verändert. Das Empfangslicht 12 trifft also je nach Objektabstand mit einem anderen Einfallswinkel Θ auf, und der Empfangslichtfleck wandert auf der Lichtleiterplatte 34.

Figur 10 zeigt eine nicht-erfindungsgemäße Anordnung mehrere Teilempfangsoptiken 16a-d mit jeweils zugeordnetem Lichtempfangselement 18a-d, um die unterschiedlichen Empfangswinkel Θ auszuwerten. Die Lichtempfangselemente 18a-d können diskrete Elemente, aber auch Bereiche eines pixelaufgelösten Lichtempfängers sein, die gemeinsam als ortsaufgelöster Lichtempfänger 18 vier Empfangssignale erzeugen.

Die jeweiligen diffraktiven Strukturen 38 der Lichtleiterplatten 34a-d sind auf einen bestimmten, jeweils eigenen und unterschiedlichen Winkelbereich Θ ausgelegt. Das korrespondiert, wie in Figur 9 zu erkennen, mit einem jeweiligen Abstandsbereich. Jede Teilstruktur 16a-d, 18a-d ist demnach für ein Teilintervall des insgesamt zu erfassenden Abstandsbereichs zuständig. Die Teilintervalle ergänzen einander, vorzugsweise auch mit einem gewissen Teilüberlapp. Somit sind die Teilstrukturen 16a-d, 18a-d Nah- und Fernzonen beziehungsweise entsprechende Mittelzonen.

Die gezeigte Anzahl von vier Teilstrukturen 16a-d, 18a-d ist rein beispielhaft, ebenso wie deren Anordnung nebeneinander. Die Figuren 11a-d zeigen mehrere, weiterhin keinesfalls abschließende Variationen, die für Ausführungsformen mit einer Ausnutzung der Asymmetrie der Koppeleffizienz, wie zu Figur 8 erläutert, und/oder für abstandsabhängige Zuständigkeiten der jeweiligen diffraktiven Struktur 38 geeignet sind, wie soeben zu den Figuren 9 und 10 erläutert. Obwohl also keine unterschiedliche diffraktive Struktur 38 durch Musterfüllungen angedeutet ist wie in Figur 10, können die Teilstrukturen in Figur 11a-d jeweils auf bestimmte, einander ergänzende Winkelbereiche Θ ausgelegt sein.

Figur 11a zeigt eine erfindungsgemäße Anordnung von vier sternförmig angeordneten Teilstrukturen 16a-d, 18a-d. Dabei sind jeweils zwei Teilstrukturen 16a,c;b,d wie in Figur 8 um 180° zueinander verdreht. Figur 11b zeigt eine nicht-erfindungsgemäße Anordnung von vier Teilstrukturen 16a-d, 18a-d in kompakterer Anordnung und paarweiser Verdrehung um 90°. In Figur 11c sind in einer nicht-erfindungsgemäßen Anordnung drei Teilstrukturen 16a-c, 18a-c hintereinander statt wie in Figur 10 nebeneinander angeordnet. In Figur 11d sind in einer weiteren nicht-erfindungsgemäßen Anordnung drei Teilstrukturen 16a-c, 18a-c wiederum nebeneinander angeordnet, aber durch entsprechende Formgebung der Trichterelemente 42a-c wird der Abstand zwischen den Lichtempfangselementen 18a-c variiert, was den realen Aufbau des Lichtempfängers 18 erleichtern kann.

In den bisherigen Ausführungsformen wurde die Unterscheidung der Einfallswinkel dadurch erreicht, dass mehrere Lichtleiterplatten 34 mit jeweils einfachem Lichtempfangselement verwendet wurden, die jeweils für bestimmte Einfallswinkel zuständig waren. Es ist aber auch möglich, mit nur einer Lichtleiterplatte 34 und deren diffraktiver Struktur Einfallswinkel zu unterscheiden.

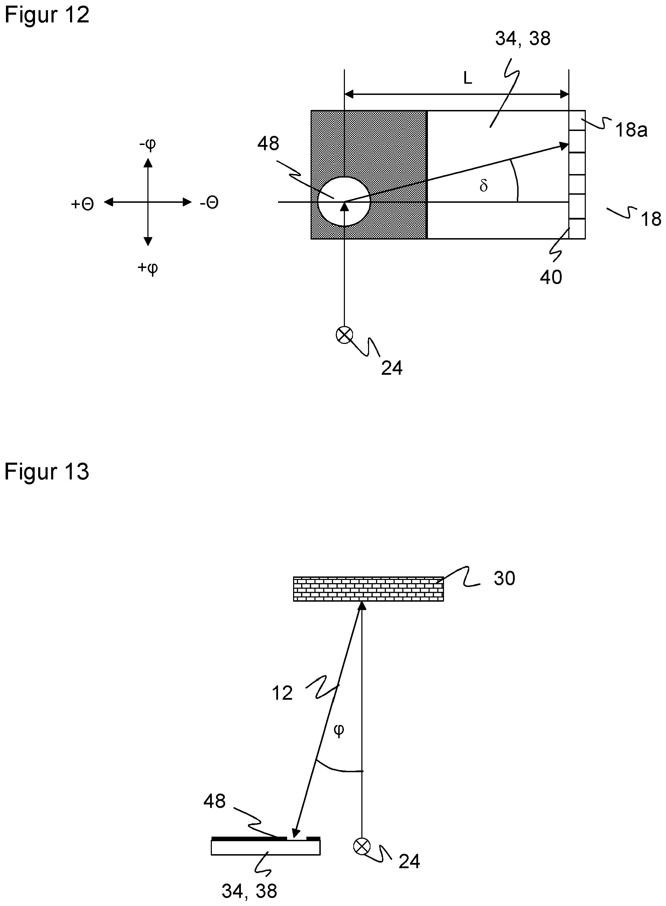

Figur 12 zeigt eine Draufsicht auf eine Lichtleiterplatte 34 beziehungsweise deren diffraktive Struktur 34. Der ortsauflösende Lichtempfänger 18 ist an der seitlichen Kante 40 angeordnet. Damit überhaupt ein lokalisierbarer Empfangslichtfleck entsteht, ist eine Blende 48 auf der Hauptfläche 36 der Lichtleiterplatte 34 angeordnet.

Im Gegensatz zu den bisherigen Ausführungsformen wird also nicht das gesamte von der Lichtleiterplatte 34 umgelenkte Licht von nur einem Lichtempfangselement erfasst und in ein summarisches Empfangssignal gewandelt. Es wird vielmehr von dem ortsauflösenden Lichtempfänger 18 unterschieden, wo Empfangslicht 12 auf die seitliche Kante 40 fällt. Derselben Lichtleiterplatte 34 beziehungsweise diffraktiven Struktur 38 ist eine Vielzahl von diskreten oder pixelartigen Lichtempfangselementen 18a zugeordnet. Alternativ kann ein PSD eingesetzt werden. Das optionale Trichterelemente 42 entfällt.

Bisher wurde der Winkel Θ für die Abstandsmessung verwendet. Hier ist es nun der dazu senkrechte Winkel ϕ. Beide Winkel Θ, ϕ wurden bereits zu Figur 3 und 4 eingeführt und sind in Figur 12 erneut eingezeichnet. Die bisherige implizite Annahme war, dass die Einkopplung in ϕ symmetrisch ist, und der Winkel ϕ wurde vernachlässigt. Die diffraktive Struktur 38 wirkt aber nicht nur in Richtung des Winkels Θ, wo bei Einhalten des engen Akzeptanzwinkelbereichs eine fast vollständige Umlenkung erfolgt. In Richtung des Winkels ϕ wirkt die diffraktive Struktur 34 fast wie ein Spiegel. Empfangslicht 12 wird also in Richtung auf die seitliche Kante 40 umgelenkt und trifft dort in Abhängigkeit von dem Winkel ϕ an einer bestimmten Stelle auf. Der Winkelbereich für ϕ, in dem das mit guter Koppeleffizienz funktioniert, ist besonders groß, wenn Θ den optimalen Akzeptanzwinkel einhält.

Bei der gezeigten Anordnung des Lichtsenders 24 trifft das Empfangslicht 12 je nach Abstand des erfassten Objekts mit unterschiedlichem Winkel ϕ auf. Der Auftreffort wandert wegen der effektiven Wirkung der diffraktiven Struktur 38 auf diese Winkelkomponente ϕ ähnlich einem Spiegel in der Darstellung in einer vertikalen Richtung. Das ist in Figur 13 nochmals aus anderer Perspektive gezeigt. Die Darstellung der Figur 12 wird um 90° gegen den Uhrzeigersinn und dann nochmals um 90° nach hinten in die Papierebene gedreht. Dadurch ist der Lichtempfänger 18 nicht zu erkennen, er liegt hinter der Lichtleiterplatte 34. Der Auftreffort wandert entsprechend dem variierenden Winkel ϕ von links nach rechts.

Um also über den Winkel ϕ messen zu können, ist der Lichtsender 24 wie dargestellt in der ϕ entsprechenden Richtung gegenüber der Lichtleiterplatte 34 zu versetzen. Der Lichtsender 24 weist also seinen Triangulationsversatz in Richtung der seitlichen Kante 40 auf. Der zusätzliche laterale Versatz dient dazu, dass der andere Winkel Θ dem optimalen Akzeptanzwinkel entspricht. Der Winkel Θ variiert hier aber nicht, sondern wird durch das Design festgelegt, und zwar vorzugsweise auf den optimalen Akzeptanzwinkel Θ=0, damit für den Winkel ϕ ein großer Winkelbereich mit guter Koppeleffizienz erreicht wird.

Bei geeigneter Anordnung des Lichtsenders 24 wird der mit dem Abstand variierende Winkel ϕ nach der Umlenkung in einen Winkel δ übersetzt. Das wiederum führt zu einem bestimmten Auftreffort auf dem ortsauflösenden Lichtempfänger 18. Ersichtlich hängt der Versatz auf dem ortsauflösenden Lichtempfänger 18 außerdem linear mit dem Abstand L, also der lateralen Ausdehnung der Lichtleiterplatte 34 zusammen, wenn man davon ausgeht, dass die Öffnung der Blende 48 jeweils am äußeren Rand angeordnet ist. Über diese Länge L lässt sich somit die Empfindlichkeit des Sensors 10 definieren, ähnlich der Brennweite der Linse bei herkömmlicher Triangulation. Bei größerem L führt ein bestimmtes δ zu einem größeren Versatz auf dem Lichtempfänger 18, die Abstandsmessung wird also empfindlicher, und umgekehrt.

Mit dieser Ausführungsform kann eine Abstandsmessung mit nur einer einzigen Lichtleiterplatte 34 beziehungsweise diffraktiven Struktur 38 erfolgen. Dennoch ist es auch denkbar, dies mit den anderen Ausführungsformen zu kombinieren und dadurch beispielsweise die gesamte abzudeckende Reichweite in Teilabschnitte zu unterteilen, wobei nun mit der Ausführungsform nach Figur 12 und 13 in jedem Teilabschnitt Abstände nicht nur klassenartig zugeordnet, sondern gemessen werden können.

Sämtliche beschriebenen Ausführungsformen können um weitere optische Elemente ergänzt werden. Beispielsweise können weitere Winkel- und Frequenzfilter vor der diffraktiven Struktur 38 angebracht werden. Weitere Variationen werden nun erläutert.

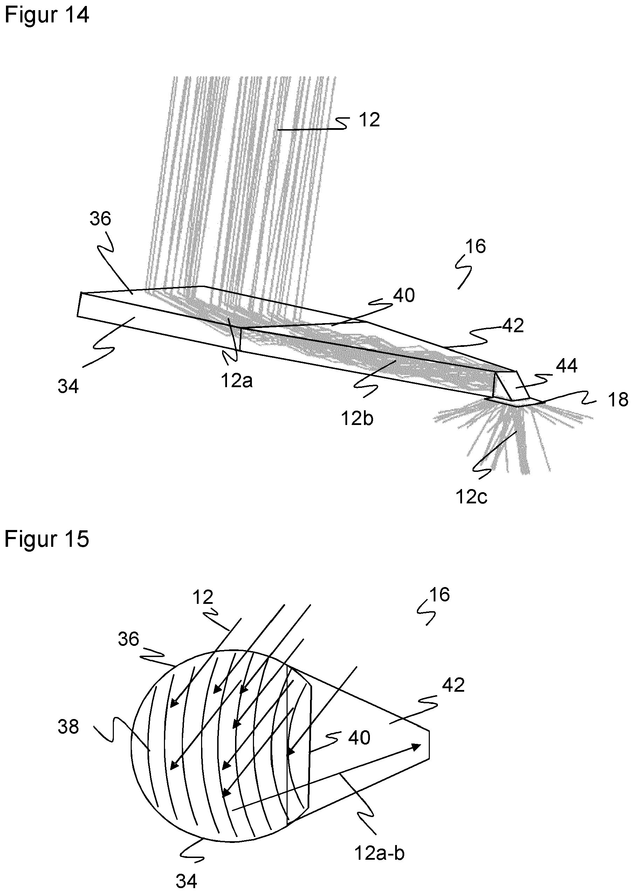

Figur 14 zeigt nochmals eine dreidimensionale Ansicht eines beispielhaften Strahlverlaufs in einer Empfangsoptik 16. Im Unterschied zu Figur 4 befindet sich an der Strahlaustrittsstelle des Trichterelements 42 nicht schon der Lichtempfänger 18 selbst, sondern zunächst ist noch ein weiteres Umlenkelement 44 zur Lichtkopplung in den Lichtempfänger 18 dazwischen angeordnet. Dadurch kehrt das austretende Empfangslicht 12c praktisch wieder in die ursprüngliche Lichteinfallsrichtung zurück, lediglich lateral um die Ausdehnung der Empfangsoptik 16 versetzt und verbreitert, was aber bei der Nähe des Lichtempfängers 18 keine Rolle spielt. Aufgrund der Lichtausfallsrichtung kann der Lichtempfänger 18 parallel zur Hauptfläche 36 ausgerichtet sein, und dies ermöglicht die besonders flache, in Figur 1 gezeigte Anordnung mit einer Leiterplatte der Steuer- und Auswertungseinheit 20 parallel zu der Empfangsoptik 16.

In Figur 14 ist das Umlenkelement 44 als Umlenkprisma ausgestaltet. Das Prisma kann Planflächen aufweisen oder zusätzlich eine Licht fokussierende Form besitzen, etwa mit sphärisch oder asphärisch gekrümmten Flächen oder einer Freiformfläche darstellen. Das Prisma kann wie das optische Trichterelement 42 zumindest teilweise verspiegelt sein, um Auskoppelverluste insbesondere am Ende des optischen Trichterelements zu reduzieren. Alternativ zu einem separaten Umlenkelement 44 ist auch vorstellbar, das optische Trichterelement 42 mit einer Art nach unten gerichtetem Fortsatz vorzugsweise mit Verspiegelung auszubilden, der diese Funktion erfüllt. Lichtleiterplatte 34, Trichterelement 42 und/oder Umlenkelement 44 können einstückig ausgebildet sein.

Figur 15 zeigt eine Draufsicht auf eine weitere Ausführungsform der Empfangsoptik 16. In den bisherigen Ausführungsformen etwa gemäß Figur 3 ist die diffraktive Struktur 38 als lineare Gitteranordnung ausgebildet. Dementsprechend erfolgt eine reine Umlenkung und Konzentration nur in der Tiefenrichtung der Lichtleiterplatte 34. Die Konzentration in der zweiten lateralen Achse findet dort erst in dem optischen Trichterelement 42 statt.

In der Ausführungsform gemäß Figur 15 ist nun stattdessen eine nichtlineare Gitteranordnung als diffraktive Struktur vorgesehen. Dadurch wird das Empfangslicht 12 schon sofort in beiden Achsen konzentriert. Das Trichterelement 42 kann dementsprechend kürzer werden oder gar ganz entfallen.

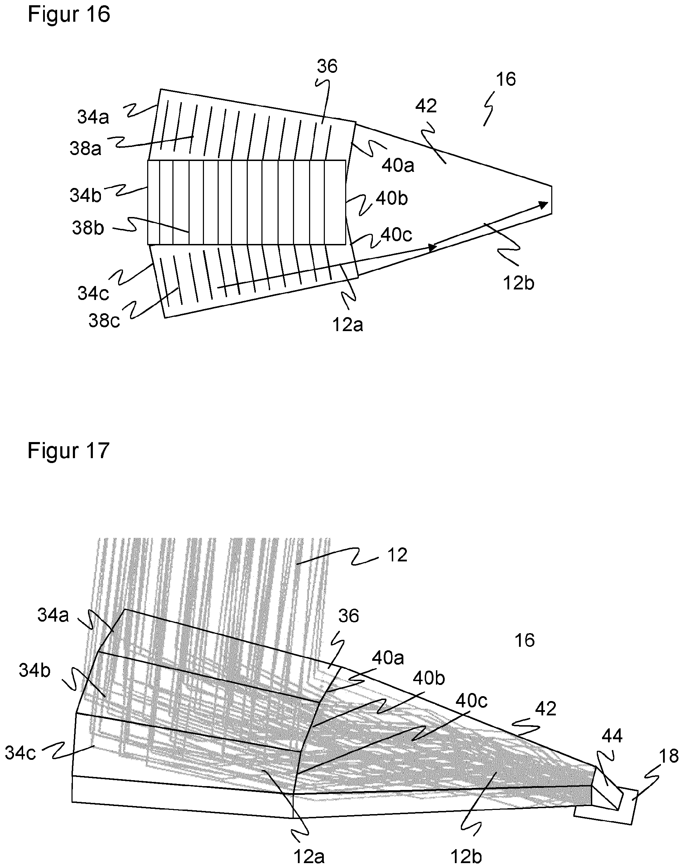

Figur 16 zeigt eine Draufsicht auf eine weitere Ausführungsform der Empfangsoptik 16. Hier ist die Lichtleiterplatte 34 in mindestens zwei Segmente 34a-c unterteilt, die in etwa querstreifenartig sind und die seitliche Kante 40 entsprechend aufteilen. Die Anzahl der Segmente ist zunächst nicht beschränkt. Die Segmente 34a,c mit Ausnahme des zentralen Segments 34b sind leicht nach innen verkippt. Genaugenommen ist das nur relevant für die linearen Gitteranordnungen 38a,c darauf.

Durch die segmentierte Anordnung linearer Gitteranordnungen 38a-c erfolgt schon eine gewisse Konzentration auch in lateraler Richtung. Die Segmentierung ist also eine Alternative zu einer nichtlinearen Gitteranordnung gemäß Figur 15, um mit einem kürzeren Trichterelement 42 oder sogar ganz ohne das Trichterelement 42 auszukommen. Eine Segmentierung gemäß Figur 16 kann aber auch mit nichtlinearen Gitterstrukturen gemäß Figur 15 kombiniert werden.

Figur 17 illustriert in einer dreidimensionalen Ansicht einen beispielhaften Strahlengang in einer Empfangsoptik 16 mit einer segmentierten Lichtleiterplatte 34a-c wie in Figur 16. Dabei wurde als Anstellwinkel der äußeren Segmente 34a,c ein Winkel von ± 9° gewählt. Die Fläche am Eingang, also bei der Hauptfläche 36, beträgt 4mm * 4,2mm, am Ausgang vor dem Lichtempfänger 18 beträgt die Fläche 1,2 mm * 1,2mm. Insgesamt kann so mit einem teilverspiegelten Umlenkprisma 44 eine Koppeleffizienz der gesamten Empfangsoptik 16 von 56% erreicht werden.

Mit einem erfindungsgemäßen diffraktiven Flachkollektor wird beispielsweise bei einer Bautiefe von nur 1 mm eine Empfangsapertur von 25 mm² und mehr erreicht. Auch größere Empfangsaperturen von beispielsweise 6 mm * 8 mm sind möglich. Der Signalgewinn steigt damit um eine Größenordnung, die Reichweite des Sensors lässt sich um Faktoren zwei, drei und mehr erhöhen. Dabei bleibt es bei äußerst kleinen Bautiefen von beispielsweise nur 3,5 mm, die nur eine herkömmliche Apertur von 1,5 mm zuließe. Erfindungsgemäß stehen diese 1,5 mm für die Dicke der flachen Empfangsoptik 16 zur Verfügung, die aber eine ungleich größere Fläche bereitstellt, mit Kantenlängen, welche die Dicke um einen Faktor zwei, drei und mehr in beiden Richtungen übersteigen.

## Patentansprüche

1. Optoelektronischer Sensor (10), insbesondere Lichtschranke oder Lichttaster, zum Erfassen von Objekten (30) in einem Überwachungsbereich (14), wobei der optoelektronische Sensor (10) einen Lichtempfänger (18) mit einer vorgeordneten Empfangsoptik (16) zum Erzeugen eines Empfangssignals aus Empfangslicht (12) aufweist, das in einer Lichteinfallsrichtung aus dem Überwachungsbereich (14) auf den Sensor (10) trifft, wobei die Empfangsoptik (16) mindestens eine flache Lichtleiterplatte (34) mit einer ersten Hauptfläche (36) und einer die erste Hauptfläche (36) an einer Seite begrenzenden seitlichen Kante (40) umfasst, die Lichtleiterplatte (34) mit ihrer ersten Hauptfläche (36) quer zu der Lichteinfallsrichtung angeordnet ist und eine diffraktive Struktur (38) aufweist, um das einfallende Empfangslicht (12) zu der seitlichen Kante (40) umzulenken, und eine Steuer- und Auswertungseinheit (20) zum Auswerten des Empfangssignals vorgesehen ist, wobei der Lichtempfänger (18) ortsauflösend und die Steuer- und Auswertungseinheit (20) dafür ausgebildet ist, aus dem Auftreffort des Empfangslichts (12) auf dem Lichtempfänger (18) eine Abstandsinformation eines erfassten Objekts (30) zu gewinnen,
**dadurch gekennzeichnet,**
**dass** die Empfangsoptik (16) mehrere flache Lichtleiterplatten (34a-d) aufweist, die jeweils mit ihrer ersten Hauptfläche (36) quer zu der Lichteinfallsrichtung angeordnet sind und eine diffraktive Struktur aufweisen, um das einfallende Empfangslicht (12) zu der seitlichen Kante (40) umzulenken und an deren seitlicher Kante (40) jeweils ein Lichtempfangselement (18a-d) des Lichtempfängers (18) angeordnet ist, wobei die Gesamtheit der Lichtempfangselemente (18a-d) den ortsauflösenden Lichtempfänger (18) bildet, da durch die Identität des jeweiligen Lichtempfangselements (18a-d) unterscheidbar ist, welche Lichtleiterplatte (34a-d) das jeweilige Licht empfangen hat, und dass die Lichtleiterplatten (34a-d) bezüglich einer Normalen auf ihre Hauptfläche (36) zueinander verdreht angeordnet sind, wobei zwei Lichtleiterplatten (34a-b) bezüglich einer Normalen auf ihre Hauptfläche (36) um 180° zueinander verdreht angeordnet sind.

2. Sensor (10) nach Anspruch 1,
der als hintergrundausblendender Lichttaster ausgebildet ist, bei dem der Lichtempfänger (18) einen Nahbereich und einen Fernbereich aufweist und der einen Schaltausgang (22) aufweist, dessen Schaltzustand davon abhängt, ob ein Objekt (30) im Nahbereich erfasst ist, oder der als Triangulationstaster ausgebildet ist, bei dem die Steuer- und Auswertungseinheit (20) aus dem Auftreffort des Empfangslichts (12) auf dem Lichtempfänger (18) den Abstand des erfassten Objekts (30) misst.

3. Sensor (10) nach Anspruch 1 oder 2,
der einen Lichtsender (24) in einer Triangulationsanordnung zu den Lichtleiterplatten (34) aufweist.

4. Sensor (10) nach einem der vorhergehenden Ansprüche,
wobei die diffraktiven Strukturen (38) der Lichtleiterplatten (34a-d) eine Gitterstruktur aufweisen, insbesondere ein Blazegitter oder Echelettegitter.

5. Sensor (10) nach einem der vorhergehenden Ansprüche,
wobei die Steuer- und Auswertungseinheit (20) dafür ausgebildet ist, die Abstandsinformation aus einer Differenz des ersten Empfangssignals des der ersten Lichtleiterplatte (34a) zugeordneten Lichtempfangselements (18a) und des zweiten Empfangssignals des der zweiten Lichtleiterplatte (34b) zugeordneten Lichtempfangselements (18b) zu bestimmen, insbesondere aus dem Quotienten aus Differenz und Summe von erstem Empfangssignal und zweitem Empfangssignal.

6. Sensor (10) nach einem der vorhergehenden Ansprüche,
wobei die diffraktiven Strukturen (38) der Lichtleiterplatten (34a-d) dafür ausgebildet sind, jeweils Empfangslicht (12) mit einer Lichteinfallsrichtung eines Akzeptanzwinkelbereichs umzulenken, wobei die Akzeptanzwinkelbereiche der Lichtleiterplatten (34a-d) unterschiedlich sind.

7. Sensor (10) nach einem der vorhergehenden Ansprüche,
wobei der Lichtempfänger (18) dafür ausgebildet ist, den Auftreffort des Empfangslichts (12) an der seitlichen Kante (40) einer Lichtleiterplatte (34) zu bestimmen.

8. Sensor (10) nach Anspruch 7,
wobei der Hauptfläche (36) eine Blende (48) vorgeordnet ist.

9. Sensor (10) nach Anspruch 7 oder 8 und 3,
wobei der Lichtsender (24) bezüglich der Lichtleiterplatten (24) derart angeordnet ist, dass die Lichteinfallsrichtung mit dem Abstand des erfassten Objekts (30) in einem Winkel quer zu der Richtung zur seitlichen Kante (40) hin variiert.

10. Sensor (10) nach Anspruch 9,
wobei der Lichtsender (24) bezüglich der Lichtleiterplatten (34) derart angeordnet ist, dass die Lichteinfallsrichtung in einen Akzeptanzwinkelbereich der diffraktiven Struktur (38) fällt.

11. Verfahren zum Erfassen von Objekten (30) in einem Überwachungsbereich (14), bei dem ein Lichtempfänger (18) mit einer vorgeordneten Empfangsoptik (12) ein Empfangssignal aus mit einer Lichteinfallsrichtung eintreffendem Empfangslicht (12) erzeugt, wobei das Empfangslicht (12) quer auf eine erste Hauptfläche (36) einer flachen Lichtleiterplatte (34) der Empfangsoptik (16) fällt und in der flachen Lichtleiterplatte (34) mittels einer diffraktiven Struktur (38) zu einer die erste Hauptfläche (36) begrenzenden seitlichen Kante (40) umgelenkt wird, wobei der Lichtempfänger (18) ortsauflösend ist und aus dem Empfangssignal entsprechend dem Auftreffort des Empfangslichts (12) auf dem Lichtempfänger (18) eine Abstandsinformation eines erfassten Objekts (30) gewonnen wird,
**dadurch gekennzeichnet,**
**dass** die Empfangsoptik (16) mehrere flache Lichtleiterplatten (34a-d) aufweist, die jeweils mit ihrer ersten Hauptfläche (36) quer zu der Lichteinfallsrichtung angeordnet sind und eine diffraktive Struktur aufweisen, um das einfallende Empfangslicht (12) zu der seitlichen Kante (40) umzulenken und an deren seitlicher Kante (40) jeweils ein Lichtempfangselement (18a-d) des Lichtempfängers (18) angeordnet ist, wobei die Gesamtheit der Lichtempfangselemente (18a-d) den ortsauflösenden Lichtempfänger (18) bildet, da durch die Identität des jeweiligen Lichtempfangselements (18a-d) unterschieden wird, welche Lichtleiterplatte (34a-d) das jeweilige Licht empfangen hat, und dass die Lichtleiterplatten (34a-d) bezüglich einer Normalen auf ihre Hauptfläche (36) zueinander verdreht angeordnet sind, wobei zwei Lichtleiterplatten (34a-b) bezüglich einer Normalen auf ihre Hauptfläche (36) um 180° zueinander verdreht angeordnet sind.

## Claims

1. An optoelectronic sensor (10), in particular a light barrier or a light scanning device, for detecting objects (30) in a monitoring area (14), the optoelectronic sensor (10) having a light receiver (18) with upstream receiving optics (16) for generating a received signal from received light (12) that is incident on the sensor (10) from the monitoring area (14) in a light incidence direction, the receiving optics (16) comprising at least one flat light guide plate (34) having a first main surface (36) and a lateral edge (40) limiting the first main surface (36) on one side, the light guide plate (34) being arranged with its first main surface (36) transverse to the light incidence direction and comprising a diffractive structure (38) in order to deflect the incident received light (12) towards the lateral edge (40), and wherein a control and evaluation unit (20) is provided for evaluating the received signal, the light receiver (18) being spatially resolving and the control and evaluation unit (20) being configured to obtain distance information of a detected object (30) from the point of incidence of the received light (12) on the light receiver (18),
**characterized in that** the receiving optics (16) comprises a plurality of flat light guide plates (34a-d) that are each arranged with their first main surface (36) transverse to the light incidence direction and comprise a diffractive structure in order to deflect the incident received light (12) to the lateral edge (40), and on the lateral edge (40) of which a respective light-receiving element (18ad) of the light receiver (18) is arranged, the totality of the light-receiving elements (18a-d) forming the spatially resolving light receiver (18), since it is possible to distinguish, by means of the identity of the respective light-receiving element (18a-d), which light guide plate (34a-d) has received the respective light, and **in that** the light guide plates (34a-d) are rotated with respect to one another relative to a normal to their main surface (36), wherein two light guide plates (34a-b) are arranged with a rotation of 180° with respect to one another relative to a normal to their main surface (36).

2. The sensor (10) according to claim 1,
which is configured as a background-suppressing light sensor, wherein the light receiver (18) has a near range and a far range and a switching output (22) whose switching state depends on whether an object (30) is detected in the near range, or which is configured as a triangulation sensor, wherein the control and evaluation unit (20) measures the distance of the detected object (30) from the point of incidence of the received light (12) on the light receiver (18).

3. The sensor (10) according to claim 1 or 2,
comprising a light transmitter (24) in a triangulation arrangement to the light guide plates (34).

4. The sensor (10) according to any of the preceding claims,
wherein the diffractive structures (38) of the light guide plates (34a-d) comprise a grating structure, in particular a blaze grating or echelette grating.

5. The sensor (10) according to any of the preceding claims,
wherein the control and evaluation unit (20) is configured to determine the distance information from a difference of the first received signal of the light receiving element (18a) assigned to the first light guide plate (34a) and the second received signal of the light receiving element (18b) assigned to the second light guide plate (34b), in particular from the quotient of the difference and sum of the first received signal and the second received signal.

6. The sensor (10) according to any of the preceding claims,
wherein the diffractive structures (38) of the light guide plates (34a-d) are configured to respectively redirect received light (12) having a light incidence direction of an acceptance angle range, wherein the acceptance angle ranges of the light guide plates (34a-d) are different.

7. The sensor (10) according to any of the preceding claims,
wherein the light receiver (18) is configured to determine the location of incidence of the received light (12) on the lateral edge (40) of a light guide plate (34).

8. The sensor (10) according to claim 7,
wherein an aperture (48) is arranged in front of the main surface (36).

9. The sensor (10) according to claim 7 or 8 and 3,
wherein the light transmitter (24) is arranged with respect to the light guide plates (24) such that the light incidence direction varies with the distance of the detected object (30) at an angle transverse to the direction towards the lateral edge (40).

10. The sensor (10) according to claim 9,
wherein the light transmitter (24) is arranged with respect to the light guide plates (34) such that the light incidence direction falls within an acceptance angle range of the diffractive structure (38).

11. A method for detecting objects (30) in a monitored area (14), wherein a light receiver (18) having upstream receiving optics (12) generates a received signal from received light (12) from a light incidence direction, wherein the received light (12) is incident transversely on a first main surface (36) of a flat light guide plate (34) of the receiving optics (16) and is deflected in the flat light guide plate (34) by means of a diffractive structure (38) to a lateral edge (40) limiting the first main surface (36), wherein the light receiver (18) is spatially resolving and distance information of a detected object (30) is obtained from the received signal corresponding to the point of incidence of the received light (12) on the light receiver (18),
**characterized in in that** the receiving optics (16) comprise a plurality of flat light guide plates (34a-d) that are each arranged with their first main surface (36) transverse to the light incidence direction and comprise a diffractive structure in order to deflect the incident received light (12) towards the lateral edge (40), and on the lateral edge (40) of which a respective light-receiving element (18a-d) of the light receiver (18) is arranged, the totality of the light-receiving elements (18a-d) forming the spatially resolving light receiver (18), since the identity of the respective light-receiving element (18a-d) is used to distinguish which light guide plate (34a-d) has received the respective light, and **in that** the light guide plates (34a-d) are rotated with respect to one another relative to a normal to their main surface (36), wherein two light guide plates (34a-b) are arranged with a rotation of 180° with respect to one another relative to a normal to their main surface (36).

## Revendications

1. Capteur optoélectronique (10), en particulier barrière lumineuse ou capteur photoélectrique, pour la détection d'objets (30) dans une zone à surveiller (14), le capteur optoélectronique (10) comprenant un récepteur de lumière (18) avec une optique de réception (16) montée en amont pour générer un signal de réception à partir de la lumière de réception (12) qui tombe sur le capteur (10) dans une direction d'incidence de la lumière depuis la zone à surveiller (14), dans lequel l'optique de réception (16) comprend au moins une plaque de guidage de lumière (34) plate ayant une première surface principale (36) et un bord latéral (40) délimitant la première surface principale (36) sur un côté, la plaque de guidage de lumière (34) est disposée avec sa première surface principale (36) transversalement à la direction d'incidence de la lumière et présente une structure diffractive (38) afin de dévier la lumière de réception incidente (12) vers le bord latéral (40), et
il est prévu une unité de commande et d'évaluation (20) pour évaluer le signal de réception, le récepteur de lumière (18) est à résolution spatiale, et l'unité de commande et d'évaluation (20) est réalisée pour obtenir une information de distance d'un objet détecté (30) à partir de l'emplacement d'incidence de la lumière de réception (12) sur le récepteur de lumière (18), **caractérisé en ce que**
l'optique de réception (16) comprend plusieurs plaques de guidage de lumière (34a-d) plates, qui sont disposées chacune avec leur première surface principale (36) transversalement à la direction d'incidence de la lumière et qui présentent une structure diffractive, afin de dévier la lumière de réception incidente (12) vers le bord latéral (40), sur le bord latéral (40) de laquelle est disposé un élément récepteur de lumière (18a-d) respectif du récepteur de lumière (18), la totalité des éléments récepteurs de lumière (18a-d) constitue le récepteur de lumière (18) à résolution spatiale, car l'identité de l'élément récepteur de lumière respectif (18a-d) permet de distinguer pour savoir quelle plaque de guidage de lumière (34a-d) a reçu la lumière respective, et **en ce que** les plaques de guidage de lumière (34a-d) sont disposées en étant tournées les unes par rapport aux autres, par rapport à une normale à leur surface principale (36), et deux plaques de guidage de lumière (34a-b) sont disposées en étant tournées de 180° l'une par rapport à l'autre, par rapport à une normale à leur surface principale (36).

2. Capteur (10) selon la revendication 1,
qui est réalisé sous forme de capteur photoélectrique à suppression d'arrière-plan, dans lequel le récepteur de lumière (18) présente une zone proche et une zone lointaine et comprend une sortie de commutation (22) dont l'état de commutation dépend de savoir si un objet (30) est détecté dans la zone proche, ou qui est réalisé sous forme de capteur à triangulation, dans lequel l'unité de commande et d'évaluation (20) mesure la distance de l'objet détecté (30) à partir de l'emplacement d'incidence de la lumière de réception (12) sur le récepteur de lumière (18).

3. Capteur (10) selon la revendication 1 ou 2,
comprenant un émetteur de lumière (24) dans une disposition de triangulation par rapport aux plaques de guidage de lumière (34).

4. Capteur (10) selon l'une des revendications précédentes,
dans lequel la structure diffractive (38) des plaques de guidage de lumière (34a-d) présentent une structure de réseau, en particulier un réseau de type blazé ou un réseau de type échelette.

5. Capteur (10) selon l'une des revendications précédentes,
dans lequel l'unité de commande et d'évaluation (20) est réalisée pour déterminer l'information de distance à partir d'une différence entre le premier signal de réception de l'élément récepteur de lumière (18a) associé à la première plaque de guidage de lumière (34a) et le deuxième signal de réception de l'élément récepteur de lumière (18b) associé à la deuxième plaque de guidage de lumière (34b), en particulier à partir du quotient de la différence et de la somme du premier signal de réception et du deuxième signal de réception.

6. Capteur (10) selon l'une des revendications précédentes,
dans lequel les structures diffractives (38) des plaques de guidage de lumière (34a-d) sont réalisées chacune pour dévier la lumière de réception (12) avec une direction d'incidence de la lumière d'une plage d'angle d'acceptance, les plages d'angle d'acceptance des plaques de guidage de lumière (34a-d) étant différentes.

7. Capteur (10) selon l'une des revendications précédentes,
dans lequel le récepteur de lumière (18) est réalisé pour déterminer l'emplacement d'incidence de la lumière de réception (12) sur le bord latéral (40) d'une plaque de guidage de lumière (34).

8. Capteur (10) selon la revendication 7,
dans lequel un diaphragme (48) est disposé en amont de la surface principale (36).

9. Capteur (10) selon la revendication 7 ou 8 et 3,
dans lequel l'émetteur de lumière (24) est disposé par rapport aux plaques de guidage de lumière (24) de telle sorte que la direction d'incidence de la lumière varie avec la distance de l'objet détecté (30) selon un angle transversal à la direction vers le bord latéral (40).

10. Capteur (10) selon la revendication 9,
dans lequel l'émetteur de lumière (24) est disposé par rapport aux plaques de guidage de lumière (34) de telle sorte que la direction d'incidence de la lumière tombe dans une plage d'angle d'acceptance de la structure diffractive (38).

11. Procédé de détection d'objets (30) dans une zone à surveiller (14), dans lequel un récepteur de lumière (18) ayant une optique de réception (12) disposée en amont génère un signal de réception à partir de la lumière de réception (12) arrivant avec une direction d'incidence de la lumière, la lumière de réception (12) tombe transversalement sur une première surface principale (36) d'une plaque de guidage de lumière (34) plate de l'optique de réception (16) et est déviée, dans la plaque de guidage de lumière (34) plate, au moyen d'une structure diffractive (38), vers un bord latéral (40) délimitant la première surface principale (36), le récepteur de lumière (18) est à résolution spatiale, et une information de distance d'un objet détecté (30) est obtenue à partir du signal de réception en correspondance de l'emplacement d'incidence de la lumière de réception (12) sur le récepteur de lumière (18),
**caractérisé en ce que**
l'optique de réception (16) comprend plusieurs plaques de guidage de lumière (34a-d) plates, qui sont disposées chacune avec leur première surface principale (36) transversalement à la direction d'incidence de la lumière et qui présentent une structure diffractive, afin de dévier la lumière de réception incidente (12) vers le bord latéral (40), et sur le bord latéral (40) de laquelle est disposé un élément récepteur de lumière (18a-d) du récepteur de lumière (18), la totalité des éléments récepteurs de lumière (18a-d) constitue le récepteur de lumière (18) à résolution spatiale, car l'identité de l'élément récepteur de lumière respectif (18a-d) permet de distinguer pour savoir quelle plaque de guidage de lumière (34a-d) a reçu la lumière respective, et **en ce que** les plaques de guidage de lumière (34a-d) sont disposées en étant tournées les unes par rapport aux autres, par rapport à une normale à leur surface principale (36), et deux plaques de guidage de lumière (34a-b) sont disposées en étant tournées de 180° l'une par rapport à l'autre, par rapport à une normale à leur surface principale (36).
